(19) [European Patent Office logo] Europäisches Patentamt / European Patent Office / Office européen des brevets

(11) **EP 1 971 509 B1**

(12) **EUROPEAN PATENT SPECIFICATION**

(45) Date of publication and mention
of the grant of the patent:
**21.09.2011 Bulletin 2011/38**

(21) Application number: **06845184.8**

(22) Date of filing: **11.12.2006**

(51) Int Cl.:
*B60S 1/08* (2006.01)    *G01R 27/26* (2006.01)

(86) International application number:
**PCT/US2006/047178**

(87) International publication number:
**WO 2007/081472 (19.07.2007 Gazette 2007/29)**

(54) **RAIN SENSOR WITH CAPACITIVE-INCLUSIVE CIRCUIT**

REGENSENSOR MIT KAPAZITIV-INKLUSIVER SCHALTUNG

DÉTECTEUR DE PLUIE À CIRCUIT INTÉGRÉ CAPACITIF

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **10.01.2006 US 757479 P
27.01.2006 US 340847
27.01.2006 US 340859
27.01.2006 US 340869
27.01.2006 US 340864**

(43) Date of publication of application:
**24.09.2008 Bulletin 2008/39**

(60) Divisional application:
**09169604.7 / 2 119 608**

(73) Proprietor: **GUARDIAN INDUSTRIES CORP.
Auburn Hills,
Michigan 48326 (US)**

(72) Inventor: **VEERASAMY, Vijayen, S.
Ann Arbor, MI 48108 (US)**

(74) Representative: **Hess, Peter K. G.
Bardehle Pagenberg
Postfach 86 06 20
81633 München (DE)**

(56) References cited:
**EP-A2- 1 359 408      DE-A1- 3 736 049
US-A1- 2004 051 396**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

This invention relates to a system and/or method for sensing the presence of rain and/or the disturbances or presence of other materials on a sheet(s) of glass such as a vehicle windshield, backlite, or sunroof. The sensing capacitors are supported by a window such
as a vehicle windshield, and have a field that is affected by moisture (e.g., rain) on a surface of the window. A sensing circuit outputs an analog signal that is based on and/or related to the capacitances of the sensing capacitors. The analog output of the circuit may be converted to a digital signal, and subjected to processing (e.g., correlation) for determining whether moisture (e.g., rain, dew, fog, etc.) or the like is present on the surface of the window.

BACKGROUND AND SUMMARY OF EXAMPLE EMBODIMENTS OF

THE INVENTION

The presence of moisture.(e.g., rain or condensation) and/or other material or debris on vehicle windshields and/or backlites may create hazardous driving conditions for drivers, passengers, and pedestrians if not promptly removed. Wiper blades are a well-known, common way to remove such materials and reduce the hazards of driving during dangerous conditions. Rain sensors have been developed to detect the presence of moisture (e.g., rain or other condensation) on a vehicle windshield, and to turn on and off wipers, as necessary, when such moisture is detected. Automatically detecting rain, sleet, fog, and the like, and taking appropriate action - for example, turning on/off wiper blades at a proper speed - potentially reduces distractions to the driver, allowing the driver to better concentrate on the road ahead. However, inappropriately turning on/off wipers or failing to actuate wipers when moisture is present may also create hazardous conditions. Moreover, such systems are also susceptible to "dirt" distractions which may cause false reads/wipes when dirt is on the windshield.
Certain conventional rain sensors are based on a capacitive concept, such as described in DE 3736049.
U.S. Patent No. 6,373,263 to Netzer teaches using capacitive rain sensors and reading the differential current between two capacitors on the windshield. Unfortunately, Netzer's system also has significant disadvantages. For example, Netzer's system is sensitive only to changes. Thus, for example, if there is already moisture (e.g., rain or condensation) on a windshield because a vehicle was parked outside during a rain shower or fog, Netzer's system may not detect the same when the vehicle is started. Moreover, Netzer's system may be subject to certain detrimental effects of electromagnetic interference (EMI), temperature changes, as well as interference from other sources. For instance, as external bodies (e.g., human hand, radio waves, etc.) interfere with the function of the capacitors, the charges of the excitation and receiver electrodes may uncontrollably vary in Netzer, thereby leading to false alarms or detections. Thus, for example, with Netzer's system, CB radios, microwaves, handheld devices, human contact with the windshield, groundable objects, and/or the like may undesirably interfere with the system, and thus possibly produce false wipes and/or detections. Netzer's system is also subject to possible false reads caused by drastic temperature changes in view of the reference capacitor system utilized by Netzer, where Netzer's reference capacitor has a different geometry/shape/size than the sensing capacitor.
Thus, it will be appreciated that there exists a need in the art for a moisture (e.g., rain) sensor that is efficient in operation and/or detection, and that overcomes one or more of the above-discussed disadvantages. According to this invention, a rain sensor and a method as defined in claims 1 and 10 are provided.

BRIEF DESCRIPTION OF THE DRAWINGS

These and other features and advantages will be better and more completely understood by reference to the following detailed description of exemplary illustrative embodiments in conjunction with the drawings, of which:
FIGURE 1(a) is a block diagram of components of an exemplary rain sensor.
FIGURE 1(b) is a cross sectional view of a rain sensor, that may use the features of Fig. 1(a) and/or one or more of Figs. 2-12.
FIGURE 1(c) is a cross sectional view of a rain sensor, that may use the features of Fig. 1(a) and/or one or more of Figs. 2-12.
FIGURE 1(d) is a cross sectional view of a rain sensor, that may use the features of Fig. 1(a) and/or one or more of Figs. 2-12.
FIGURE 1(e) is a cross sectional view of a rain sensor, that may use the features of Fig. 1(a) and/or one or more of Figs. 2-12.
FIGURE 1(f) is a cross sectional view of a rain sensor, that may use the features of Fig. 1(a) and/or one or more of Figs. 2-12.

FIGURE 2A is an exemplary optimized pattern for a quadrant capacitive array based on Hilbert fractals, where such capacitors may be provided on the window as a sensor array in one or more of Figs. 1(a)-1(f) and 4-12 for example.

FIGURE 2B is another exemplary optimized pattern for a quadrant capacitive array, where such capacitors may be provided on the window as a sensor array in one or more of Figs. 1(a)-1(f) and 4-12 for example.

FIGURE 3 is an enlarged picture of yet another exemplary quadrant capacitive array, where such capacitors may be provided on the window as a sensor array in one or more of Figs. 1(a)-1(f) and 4-12 for example.

FIGURE 4 is an example circuit diagram including circuitry used for a write clock pulse in readout electronics, for use in one or more of Figs. 1(a)-1(f) and 5-12, in accordance with the invention.

FIGURE 5 is an example circuit diagram including circuitry used for an erase clock pulse in readout electronics, for use in one or more of Figs. 1(a)-1(f), 4 and 6-12, in accordance with the invention.

FIGURE 6 is an exemplary timing diagram derived from readout circuitry of Figs. 4-5.

FIGURE 7 is an exemplary flowchart or state diagram showing how autocorrelation and cross-correlation data may be used to control wipers, which may be used in conjunction with one of more of Figs. 1-6 and 8-12.

FIGURE 8 is an exemplary flowchart showing how autocorrelation and cross-correlation data can be used to control wipers, which may be used in conjunction with one of more of Figs. 1-7 and 9-12.

FIGURE 9 is an exemplary stylized view of how a rain droplet might travel across a windshield.

FIGURE 10 is an graph plotting example experimentally-obtained maximum values of non-normalized autocorrelations for different disturbances.

FIGURE 11A is an example experimentally-obtained autocorrelation snapshot indicative of heavy rain.

FIGURE 11B is an example experimentally-obtained autocorrelation snapshot indicative of a light mist.

FIGURE 11C is an example experimentally-obtained autocorrelation snapshot indicative of CB radio interference.

FIGURE 11D is an example experimentally-obtained autocorrelation snapshot indicative of a grounded body with a voltage.

FIGURE 12A is an exemplary correlation matrix indicative of light rain.

FIGURE 12B is an exemplary correlation matrix indicative of heavy rain.

FIGURE 13 is an example of autocorrelation.

FIGURE 14 is a chart setting forth example cross-correlation data from capacitors C1, C2.

FIGURE 15 is a crosscorrelation graph, plotting crosscorrelation values versus time lags (the time lags are in terms of microseconds in the time domain), using certain signals from Fig. 14.

FIGURE 16 is a crosscorrelation graph, plotting crosscorrelation values versus time lags (the time lags are in terms of microseconds in the time domain), using certain signals from Fig. 14.

FIGURE 17 is a crosscorrelation graph, plotting crosscorrelation values versus time lags (the time lags are in terms of microseconds in the time domain), using certain signals from Fig. 14.

FIGURE 18 is a crosscorrelation graph, plotting crosscorrelation values versus time lags (the time lags are in terms of microseconds in the time domain), using certain signals from Fig. 14.

FIGURE 19 is a crosscorrelation graph, plotting crosscorrelation values versus time lags (the time lags are in terms of microseconds in the time domain), using certain signals from Fig. 14.

FIGURE 20 is a crosscorrelation graph, plotting crosscorrelation values versus time lags (the time lags are in terms of microseconds in the time domain), using certain signals from Fig. 14.

FIGURE 21 is a crosscorrelation graph, plotting crosscorrelation values versus time lags (the time lags are in terms of microseconds in the time domain), using certain signals from Fig. 14.

FIGURE 22 is a crosscorrelation graph, plotting crosscorrelation values versus time lags (the time lags are in terms of microseconds in the time domain), using certain signals from Fig. 14.

FIGURE 23 is a crosscorrelation graph, plotting crosscorrelation values versus time lags (the time lags are in terms of microseconds in the time domain), using certain signals from Fig. 14.

FIGURE 24 is a crosscorrelation graph, plotting crosscorrelation values versus time lags (the time lags are in terms of microseconds in the time domain), using certain signals from Fig. 14.

FIGURE 25 is a block diagram illustrating circuitry and/or processing of signals where a sensing capacitor (e.g., C1) is present, including sigma-delta modulation.

FIGURE 26 is a block diagram illustrating circuitry and/or processing of signals where a plurality of capacitors (e.g., C1-C4) are present, including sigma-delta modulation.

FIGURE 27 is a block diagram illustrating sigma-delta modulation ; this processing being performed in circuitry, firmware and/or software.

FIGURES 28(a) AND 28(b) are schematic diagrams illustrating advantages of using floating electrodes for sensing capacitors (e.g., C1-C4).

DETAILED DESCRIPTION OF EXAMPLE EMBODIMENTS OF THE INVENTION

Referring now more particularly to the accompanying drawings in which like reference numerals indicate like parts throughout the several views.

A rain sensor system and/or method is provided and includes capacitance-based detection which translates a physical input signal (e.g., the presence of a drop of water on a windshield, or the like) into a digital electrical voltage signal which is received and interpreted by a software program(s) or circuit(s) that decides whether windshield wipers should be activated, and, if so, optionally their proper speed. Thus, capacitive coupling is used to detect water and/or other material in the exterior surface of a window such as a vehicle windshield, sunroof, and/or backlite. It will be appreciated that computational methods may be performed by hardware or a combination of hardware and software. No reference capacitance or capacitor may be needed (i.e., no compensation capacitor is needed).

A permittivity equation gives a physical quantity that describes how an electric field affects and is affected by a medium. An example basic permittivity equation is:

$$D = \varepsilon_0 E + P,$$

where $D$ is electrical flux, $\varepsilon_0$ is the dielectric constant of a vacuum, $E$ is an electrical field (e.g., the voltage setup between plates or electrodes divided by distance, or V/m), and $P$ is polarization. Polarization P can be further described mathematically as:

$$P = \varepsilon_r \varepsilon_0 E,$$

where $\varepsilon_r$ is relative permittivity (e.g., the dielectric constant of water, ice, dirt or anything else that could be on an exterior surface of a window such as a windshield). In general, a high value of $\varepsilon_i$ will correspond to high polarizability. The permittivity of glass is approximately 8, and the permittivity of water is approximately 85. By substitution and factorization, then, the permittivity equation can be rewritten as:

$$D = \varepsilon_0 (\varepsilon_r + 1) E.$$

In this form, it will be appreciated that $D$ is the response to excitation $E$.

Capacitance $C$ is given by $C=Q/V$, where Q is the charge and V is the potential, in volts. Additionally, $C=\Phi/V$, where $\Phi$ is the electric flux associated with charge Q. By Gauss' Law:

$$\Phi = \oint E \cdot dA,$$

where dA is the area of a differential square on the closed surface $S$. By substitution, then, it becomes clear that capacitance is related to potential difference:

$$C = \int DdA / V.$$

These equations form the basis of an example technique for measuring the interaction of water on glass by using a sensor with a capacitive array to probe above the window (e.g., glass). In particular, data from a sensor including at least one, or two or more, capacitor(s) (e.g., C1, C2, C3, etc.) may be used to detect whether rain is present on an exterior surface of a window such as a vehicle windshield or backlite. The above equations illustrate that the presence of water on the surface of a window can affect the capacitance of an appropriately positioned sensing capacitor.

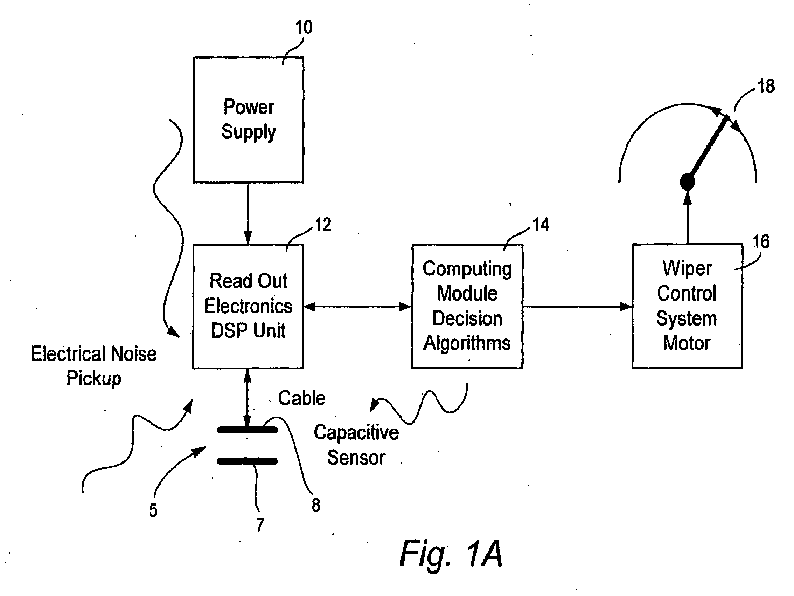

Fig. 1(a) is a block diagram of example components of a rain sensor. Power supply 10 is connected to readout electronics 12 which may include one or more of hardware, firmware, and/or software. As will be described in greater detail below, .the sensor includes one or more capacitors so as to make up a capacitive sensor 5. While different types of capacitors may be used, capacitors each having a pair of approximately coplanar electrodes arranged in a fractal pattern may be used in the sensor. A fractal pattern may be divided into a capacitive array. Data from and/or related to the sensing capacitor(s) of the capacitive sensor 5 is received and read by readout electronics 12 which may be made up of one or more of hardware, firmware and/or software. Readout electronics 12 pick up electrical noise and convert the same to digital signal(s). This digital signal(s) is passed to computing module 14 (which may be made up of one or more of hardware, firmware and/or software) which determines what action the wipers should take. For example, the wipers might initiate a single wipe, low-speed wipes, high-speed wipes, etc., based on the data analyzed from and/or related to the capacitive sensor. The wipers also may be caused to turn off, slow/increase the speed at which they are wiping, etc., based on the data analyzed from and/or related to the capacitive sensor. Wiper control system motor 16 receives instructions from computing module 14 and directs wipers 18 to take the appropriate action.

The capacitive sensor 5 interfaces with a Local Interconnect Bus (LIN bus) of a vehicle. A LIN bus (not shown) typically is a serial bus to which slave devices in an automobile are connected. A LIN bus typically executes a handshake (s) with slave devices to ensure that they are, for example, connected and functional. Additionally, a LIN bus may provide other information to slave devices, such as, for example, the current time.

The capacitive sensor 5 includes a plurality of capacitors in the form of any suitable array.

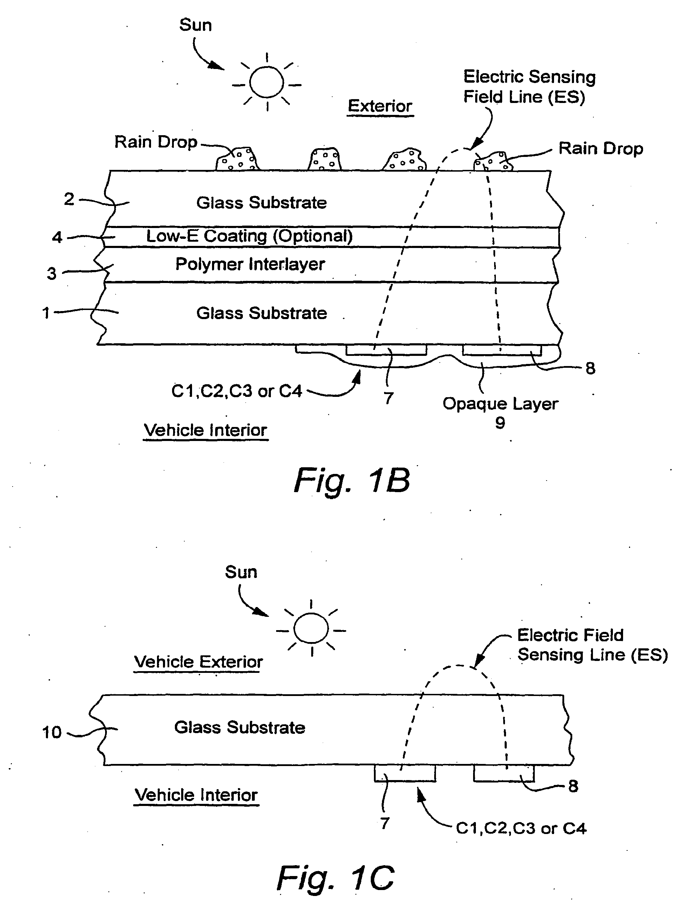

Fig. 1(b) is a cross-sectional view of a vehicle window including a rain sensor according to an example embodiment of this invention. A windshield of the vehicle includes inner glass substrate 1 and outer glass substrate 2 that are laminated together via a polymer-inclusive interlayer 3 of a material such as polyvinyl butyral (PVB) or the like. An optional low-e (low emissivity) coating 4 may be provided on the inner surface of the exterior glass substrate 2 (or even on the surface of substrate 1). A low-E coating 4 typically includes at least one thin IR reflecting layer of a material such as silver, gold or the like sandwiched between at least first and second dielectric layers of material such as silicon nitride, tin oxide, zinc oxide, or the like. Example low-E coatings 4, are described in U.S. Patent Nos. 6,686,050, 6,723,211,6,782,718, 6,749,941, 6,730,352, 6,802,943, 4,782,216, 3,682,528, and 6,936,347.

Fig. 1(b) illustrates an example capacitor of the capacitive sensor. While the capacitive sensor of Fig. 1(a) typically includes a plurality of capacitors in an array, only one capacitor of the sensor is shown in Fig. 1 (b) for purposes of simplicity. The other capacitors are similar in cross section to the one shown in Fig. 1(b) in certain example embodiments of this invention. The example capacitor (C1, C2, C3 or C4) of the capacitive sensor shown in Fig. 1(b) includes a pair of spaced apart coplanar or substantially coplanar capacitor electrodes 7 and 8. The electrodes 7 and 8 are of a conductive material that may be printed or otherwise formed on the window. For example, the capacitor electrodes 7 and 8 of the sensing capacitor may be made of or include silver, ITO (indium tin oxide), or other suitable conductive material. In certain example embodiments, the capacitor shown in Fig. 1 (b) is affected by a rain droplet on the exterior surface of the window because electric field Es of the capacitor extends to or beyond the exterior surface of the window as shown in Fig. 1(b) and thus can interact with the rain droplet or other material on the window's exterior surface. Signals received from and/or relating to the sensing capacitor(s) and analysis thereof is described herein.

In Fig. 1(b), an opaque insulating layer (e.g., black frit or enamel, or the like) 9 is provided on the window over the electrodes 7 and 8 in order to shield the electrodes 7, 8 from the view of a passenger(s) sitting inside the vehicle. Thus, it will be appreciated that the opaque layer 9 is only provided on a small portion of the window, including in the area where the capacitive array of the rain sensor's array of capacitors is located. The rain sensor's capacitive array and thus the opaque layer 9 may be located on a vehicle windshield in an area proximate the rear-view mirror mounting bracket. The opaque layer 9 (e.g., black frit or enamel) may contact the fractal pattern of the capacitor electrodes 7, 8 directly because the layer 9 is not conductive. However, even if a black frit layer 9 were conductive (which is possible), its dielectric constant is close to that of water so that it will not adversely interfere with the capturing of data from and/or related to the capacitors C1-C4 and associated analysis.

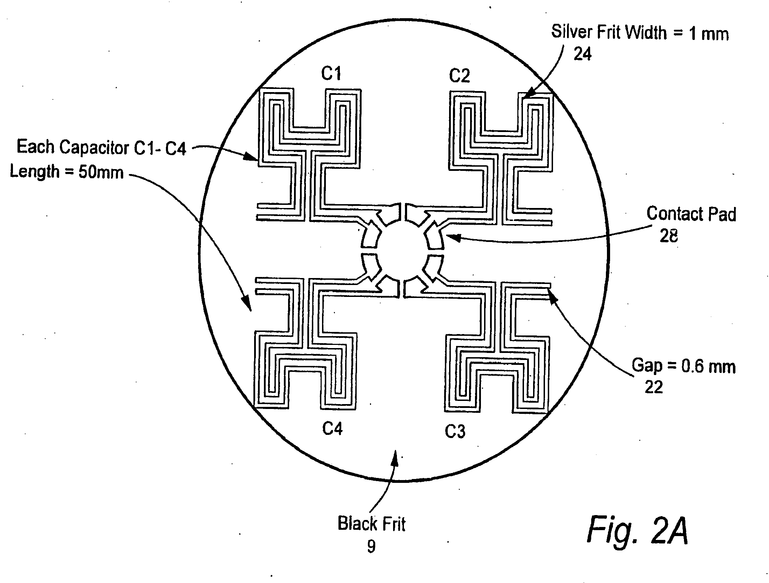

Fig. 2A is a top or plan view illustrating an example capacitive sensor array including four capacitors C1, C2, C3 and C4. Each of these capacitors C1, C2, C3 and C4 includes first and second spaced apart coplanar capacitor electrodes 7 and 8 as shown in Fig. 1(b) (or any of Figs. 1(c)-1(f)). The capacitor electrodes 7 and 8 of each capacitor C1-C4 may be made of conductive silver frit or the like as shown in Fig. 2A. Moreover, there may be a gap 22 of from about 0.2 to 1.5 mm, more preferably from about 0.3 to 1.0 mm (e.g., 0.6 mm), between the coplanar capacitor electrodes 7 and 8 of a capacitor (C1, C2, C3 and/or C4) as shown in Fig. 2A. In Fig. 2A, the capacitors C1-C4 are covered with an insulating black frit layer 9 which is the same as the opaque layer 9 discussed above with respect to Fig. 1(b). In Fig. 2A, a contact pad array is provided in the center of the sensor array, and includes four contact pads electrically connected to the respective electrodes 7 of the capacitors C1-C4, and four contact pads electrically connected to the respective electrodes 8 of the capacitors C1-C4. An example contact pad is referred to by reference numeral 28 in Fig. 2A. The four white colored contact pads 28 in Fig. 2A are electrically connected to the respective capacitor electrodes 7 of capacitors C 1-C4, whereas the dark grey colored contact pads 28 in Fig. 2A are electrically connected to the respective capacitor electrodes 8 of the capacitors C1-C4. All of the sensing capacitors C1-C4 are sensitive to moisture such as rain on the external surface of the window.

In Fig. 2A, each of the capacitors C1-C4 of the capacitive sensor is formed using fractal geometry. In particular, each of the coplanar electrodes 7 and 8 of each capacitor C1-C4 is formed with a fractal geometry. Fractal design patterns allow, for example, a high capacitance to be realized in a small area, and are therefore desirable over other geometries in certain example rain sensor applications. Fractal geometry may be grouped into (a) random fractals, which may be called chaotic or Brownian fractals and include a random noise component, and (b) deterministic or exact fractals. In deterministic fractal geometry, a self-similar structure results from the repetition of a design or motif (or "generator") (i.e., self-similarity and structure at all scales). In deterministic or exact self-similarity, fractal capacitors may be constructed through recursive or iterative means. In other words, fractals are often composed of or include many copies of themselves at different scales.

In Fig. 2A, it can be seen that the coplanar electrodes 7 and 8 of each capacitor (where the electrodes 7 and 8 are shown but not labeled in Fig. 2A due to the dark color of the frit 9, but are spaced apart by gaps 22) have fractal geometries and are arranged substantially parallel to each other throughout the meandering length of each capacitor. In other words, each electrode 7, 8 of a given capacitor (e.g., C1, C2, C3 or C4) has a meandering shape in the fractal geometry, but stays substantially parallel to the other electrode (the other of 7, 8) of the capacitor throughout the meandering length of the capacitor. The overall length of each capacitor (e.g., C1), along the meandering length of the fractal, is from about 25 to 200 mm in certain example embodiments of this invention, more preferably from about 30 to 90 mm, with an example being about 50 mm.

The fractal pattern of Fig. 2A is a Hilbert fractal pattern. The electrodes 7, 8 of the capacitors C1-C4 in Fig. 2A form a Hilbert fractal pattern, for purposes of example only and without limitation. In particular, the capacitors shown in Fig. 2A are shaped in a third-order Hilbert fractal manner. Hilbert fractals are continuous space-filling fractals, with fractal dimensions of two. This means that higher-order fractals will become more square-like. A Hilbert fractal can be formed by using the following L-system:

```
Hilbert {

    Angle 90
    Axiom X
    X=-YF+XFX+FY-
    Y = +XF-YFY-FX+
}
```

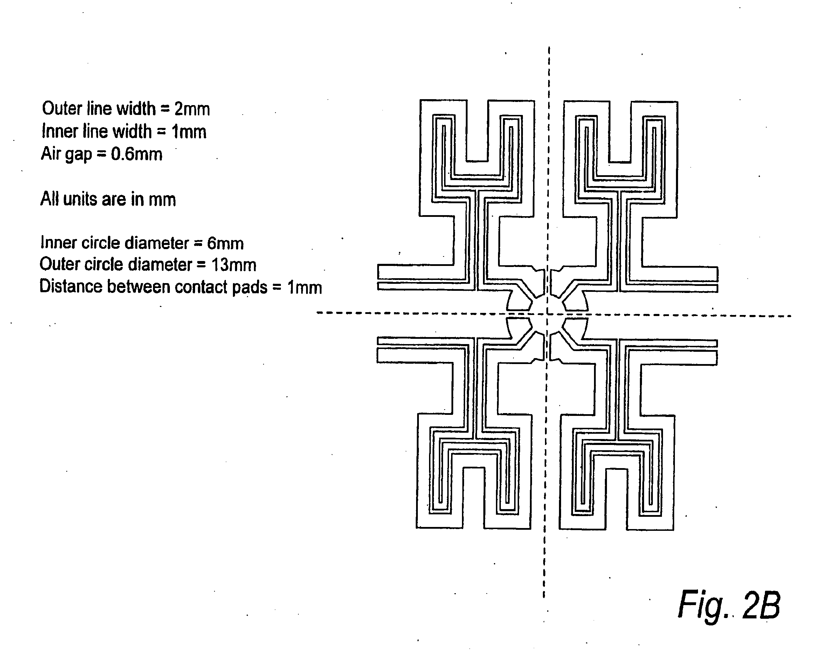

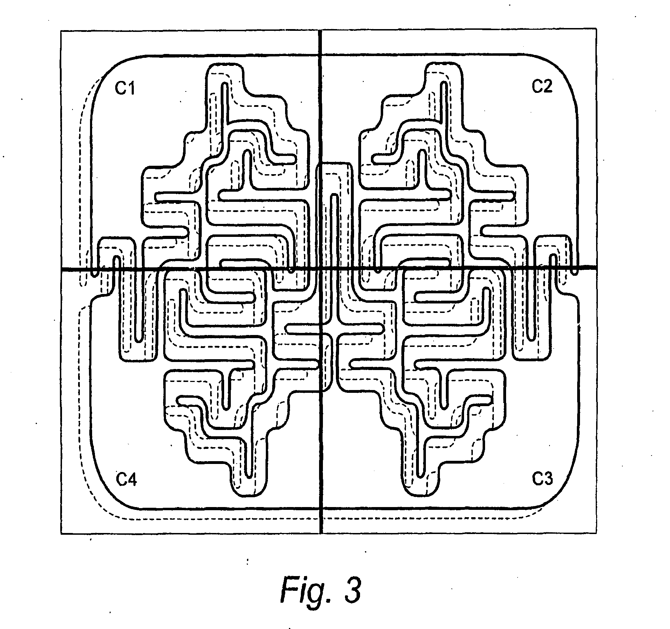

where "Angle 90" sets the following rotations to 90 degrees, X and Y are defined functions, "F" means "draw forward", "+" means "turn counterclockwise", and "-" means "turn clockwise". While Hilbert fractal geometries may be used in forming the capacitors C1-C4, other types of fractals may also be used to form the capacitor shapes. For example, the capacitor electrodes 7, 8 of capacitors C1-C4 may be formed using any of the fractal designs disclosed in any of U.S. Patent Nos. 6,552,690, 6,104,349, 6,140,975, 6,127,977, 6,084,285, 6,975,277. As shown in Figs. 2A, 2B and 3, all sensing capacitors of the sensing array may be identical or substantially identical in shape.

Each of the capacitors C1-C4 in the sensor array may be electrically floating (this may be called a virtual ground in certain example instances) so as to not have a fixed common ground such as a fixed zero volts, and/or spatially separated or the like which may be useful with respect to the correlation functions. Additionally, the lack of a common ground means that the capacitive array will not be subject to adverse effects from interference such as, for example, EMI interference thereby reducing the potential for false wipes, false detections, and the like.

The fractal design for capacitors C1-C4 may be used in any of the embodiments of Figs. 1 (a)-1(f).

Fig. 1 (c) is a cross sectional view of another example, which may use the system of Figs. 1(a) and one or more of Figs. 2-12. In Fig. 1(c), the vehicle window (e.g., backlite) is made up of only one glass sheet 10, and the electrodes 7, 8 of the capacitor are provided on, directly or indirectly, the interior major surface of the glass sheet 10. The capacitor (e.g., C1) shown in Fig. 1(c) is designed such that it is affected by a rain droplet on the exterior surface of the window because the electric field Es of the capacitor extends to or beyond the exterior surface of the window as shown in Fig. 1(c) and thus can interact with the rain droplet or other material on the window's exterior surface. Each of the capacitors C1-C4 is formed in a similar manner. It is noted that the use of the word "on" herein covers both directly on and indirectly on, and is not limited to physical contact or touching unless expressly stated. An opaque layer 9, similar to that shown in Fig. 1(b), may also be provided in Fig. 1(c) if desired.

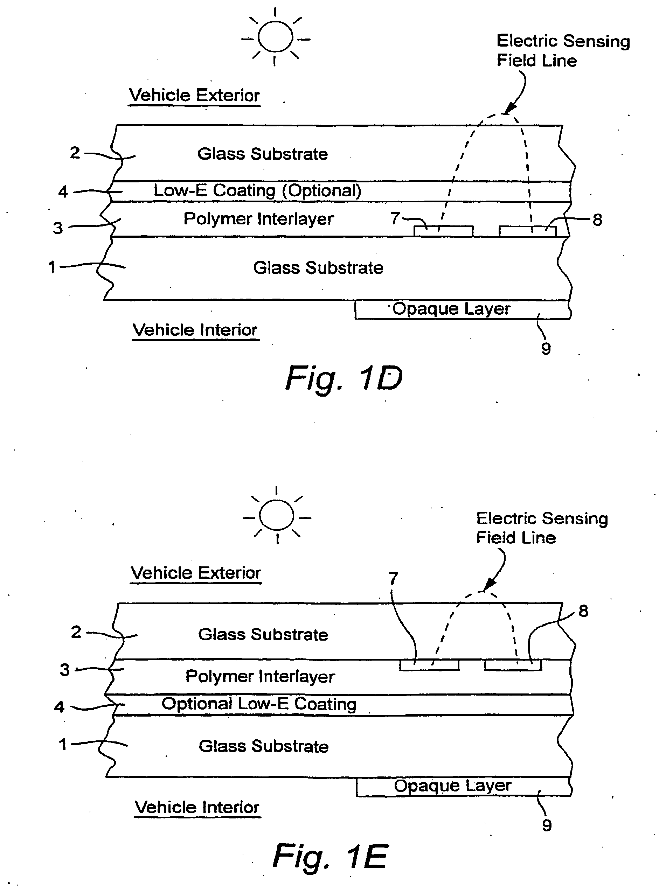

Fig. 1(d) is a cross sectional view of another example, which may use the system of Figs. 1 (a) and one or more of the embodiments of Figs. 2-12. In Fig. 1(d), the vehicle window (e.g., laminated windshield) includes glass sheets 1 and 2 laminated together via polymer based interlayer 3, and optionally includes a low-E coating 4 on either substrate 1 or substrate 2. Fig. 1(d) differs from Fig. 1(b) in that the electrodes 7, 8 of the capacitor are provided on the major surface of glass substrate 1 that is furthest from the vehicle interior. The capacitor electrodes 7, 8 may contact the polymer interlayer 3 in this embodiment, in certain example instances. The capacitor (e.g., C1, C2, C3 or C4) shown in Fig. 1(d) is designed such that it is affected by a rain droplet (or other material) on the exterior surface of the window because the electric field Es of the capacitor extends to or beyond the exterior surface of the window as shown in Fig. 1(d) and thus can interact with the rain droplet or other material on the window's exterior surface. Each of the capacitors C1-C4 of the sensor array is formed in a manner similar to that shown for the capacitor of Fig. 1(d). Opaque layer 9 may also be provided in Fig. 1(d) if desired, over a , portion of the window so as to shield the capacitor electrodes from a vehicle passenger's view. In fig. 1(d), the electrodes 7 and 8 may be formed of a conductive silver frit or ITO printed or patterned directly on and contacting the surface of substrate 1. However, the electrodes 7 and 8 of one or more capacitors of the sensor may instead be formed and patterned from a metallic conductive IR reflecting layer (e.g., silver based layer) of a low-E coating 4 that is supported by the window.

Fig. 1 (e) is a cross sectional view of another example, which may use the system of Figs. 1(a) and one or more of Figs. 2-12. In Fig. 1(e), the vehicle window (e.g., laminated windshield) includes glass sheets 1 and 2 laminated together via polymer based interlayer 3, and optionally includes a low-E coating 4 on either substrate 1 or substrate 2. Fig. 1(e) differs from Fig. 1(b) in that the electrodes 7, 8 of the capacitor (e.g., C1, C2, C3 or C4) are provided on the major surface of the exterior glass substrate 2 that is closest to the vehicle interior. The capacitor electrodes 7, 8 may contact the polymer interlayer 3. The capacitor (e.g., C1, C2, C3 or C4) shown in Fig. 1(e) is designed such that it is affected by a rain droplet (or other material) on the exterior surface of the window because the electric field Es of the capacitor extends to or beyond the exterior surface of the window as shown in Fig. 1(e) and thus can interact with the rain droplet or other material on the window's exterior surface. Each of the capacitors C1-C4 of the sensor array is formed in a manner similar to that shown for the capacitor of Fig. 1(e). Opaque layer 9 may also be provided in the Fig. 1(e) embodiment if desired, over a portion of the window so as to shield the capacitor electrodes from the view of a vehicle passengers(s).

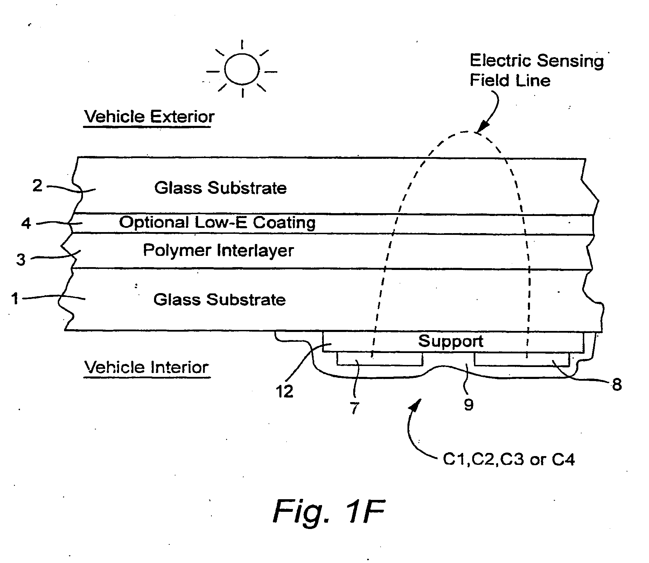

Fig. 1(f) is a cross sectional view of another example , which may use the system of Figs. 1(a) and one or more of Figs. 2-12. In Fig. 1(f), the vehicle window (e.g., laminated windshield) includes glass sheets 1 and 2 laminated together via polymer based interlayer 3, and optionally includes a low-E coating 4 on either substrate 1 or substrate 2. Fig. 1(f) differs from Fig. 1(b) in that the electrodes 7, 8 of the capacitor (e.g., C1, C2, C3 or C4) are provided on the major surface of the interior glass substrate 1 that is closest to the vehicle interior, via support member 12. The support member 12, located between the glass substrate 1 and the electrodes 7, 8, may be made of glass, silicon or the like. The capacitor (e.g., C1, C2, C3 or C4) shown in Fig. 1(e) is designed such that it is affected by a rain droplet (or other material) on the exterior surface of the window because the electric field Es of the capacitor extends to or beyond the exterior surface of the window as shown in Fig. 1(f) and thus can interact with the rain droplet or other material on the window's exterior surface. Each of the capacitors C1-C4 of the sensor array is formed in a manner similar to that shown for the capacitor of Fig. 1(f). Opaque layer 9 may also be provide in the Fig: 1(f) embodiment if desired, over a portion of the window so as to shield the capacitor electrodes 7, 8 from the view of a vehicle passengers(s).

FIG. 2B is a plan view of an example pattern for a quadrant capacitive array of fractal shaped capacitors C1-C4 for the capacitive sensor. The four capacitors shown in Fig. 2B are similar to those of Fig. 2A, except for the precise shapes thereof. The Fig. 2B capacitors may be used in any of Figs. 1(a)-(f). The superimposed dashed lines show the divisions into four distinct capacitors C1-C4. The outer line width may be about 2mm, and the inner line width about 1mm.

Fig: 3 is an enlarged picture of another exemplary quadrant capacitive array of fractal shaped capacitors-C1-C4 for the capacitive sensor. The four capacitors shown in Fig. 3 are similar to those of Figs. 2A and 2B, except for the precise shapes thereof. The Fig. 3 fractal capacitors may be used in any of Figs. 1(a)-(f). The superimposed lines show example division between capacitors C1-C4 in Fig. 3. It will be appreciated that one may have capacitive arrays with as few as two capacitors. However, it is preferable to have at least four capacitors to pick up and derive nuances in perturbations.

The use of the fractal geometry for the sensing capacitors C1-C4 can be advantageous in reducing false readings due to EMI interference. In particular, fractals at high iterations help reduce EMI interference issues, because the Faraday cage or quasi-Faraday cage of the fractal at high iterations reduces EMI coupling thereby reducing adverse effects of EMI interference. Fractals at high iterations form quasi-Faraday cages.

The readout electronics look at the interaction of rain and/or other perturbations on the window. This process is accomplished by sequentially charging capacitors, reading their data, quantizing that data, and erasing the charges, as defined in claims 1 and 10.

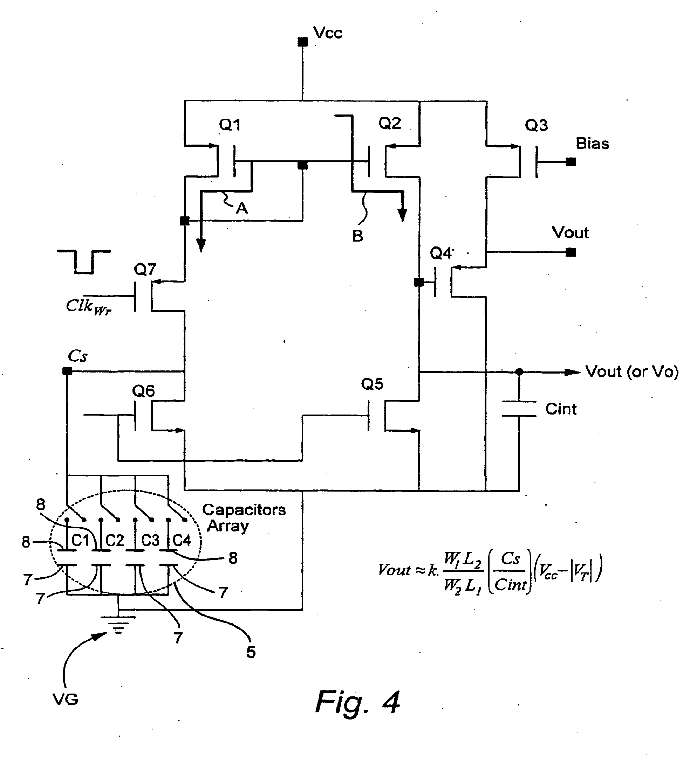

Fig. 4 is a circuit diagram of a sensing or read-out circuit according to this invention. The sensing circuit of Fig. 4 may be made up of the electronics unit 12 and the capacitive sensor array 5 of Fig. 1. Any of the capacitors of Figs. 1(b)-1(f), 2A, 2B, and/or 3 may be used as the capacitors C1-C4 of the circuit in Fig. 4. The Fig. 4 circuitry is used for a write clock pulse in readout electronics. Transistors Q1, Q2, and Q7 are p-channel MOSFETs, with transistors Q1 and Q2 primarily being responsible for a write phase. Transistors Q5 and Q6 are n-channel MOSFETs.

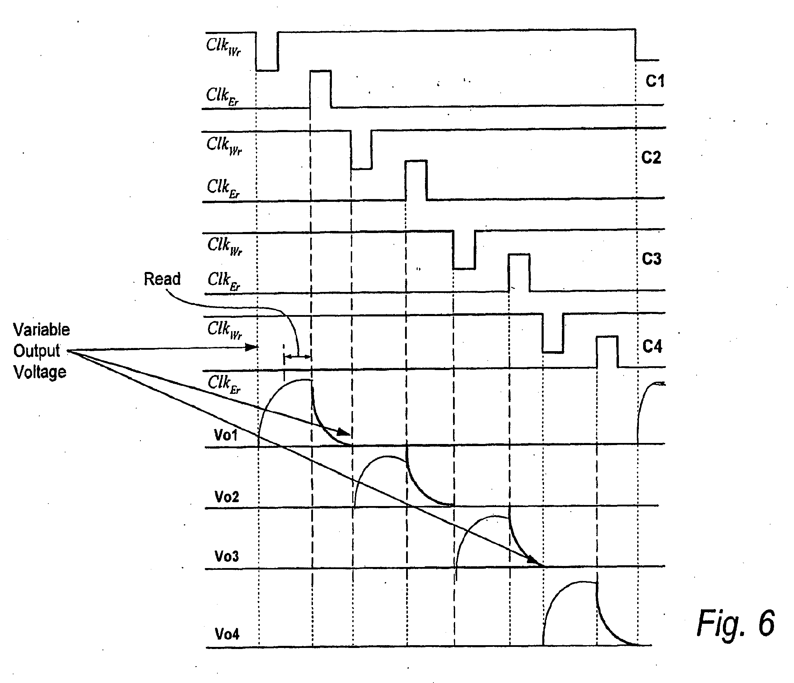

Still referring to Fig. 4, during a write phase a write pulse $Clk_{Wr}$ is input to the gate of transistor Q7, which functions like a resistor or switch, charging one or more of the capacitors C1-C4 of the sensor capacitance $C_s$. Fig. 6 includes certain signals used in the Fig. 4 circuit in the write cycle. In the write cycle, Transistor Q1 is in a saturated mode, since its gate and drain are connected, so that Q1 is on. Q4, Q5 and Q6 are turned off, and Q2 is on during the write mode. Transistors Q3 and Q4 are optional. When Q7 is turned on by the write pulse, we have a write cycle, and Vcc appears at Cs via A and charges one or more of the capacitors C1-C4 of the sensor capacitance Cs. $V_{cc}$ may be a constant voltage, such as 5V. One or more of the capacitors C1-C4 may be charged at a time during a write cycle, or the circuit charges and reads the capacitors C1, C2, C3 and C4, one at a time (e.g., see Figs. 6), during one write cycle, only one of the capacitors C1, such that C2, C3 or C4 is charged.

The above process described for the left side of the Fig. 4 sensing circuit is essentially mirrored on the opposite or right side of the Fig. 4 circuit. As current flows through the left-side branch, current also flows at B through the right-side branch, and changes to $C_s$ are mimicked, or substantially mimicked in internal mimicking capacitance $C_{int}$. When Q7 is turned on, current also flows through Q2 (which is on) and charges $C_{int}$ using Vcc. Thus, the charging of one of the capacitors C1-C4 is mimicked by the charging of capacitor $C_{int}$. In other words, $C_{int}$ is charged to the same degree, or substantially the same degree, as the capacitor (e.g., C1) being charged on the other side of the Fig. 4 circuit. The output voltage of the Fig. 4 circuit, Vout (or Vo), is based on $C_{int}$ and is taken at or proximate an electrode of the capacitor $C_{int}$ as shown in Fig. 4. An example formula reflecting Vout (or Vo) is shown at the bottom of Fig. 4. Accordingly, it will be appreciated that the output Vout (or Vo) of the Fig. 4-5 circuit is related to and based on the capacitors C1-C4 of the sensor Cs. More specifically, the output Vout of the Fig. 4-5 circuit is related to and indicative of the status of capacitors C1-C4 and the effects on those capacitors of moisture on the exterior window surface, even though Vout is not taken directly from capacitors C1-C4. In particular, Vout (or Vo) is read out during the write cycle, due to the write pulse shown in Fig. 4 (see also Fig. 6). In the formula at the bottom of Fig. 4 for Vcut, W1 is for Q1, W2 is for Q2, L1 is for Q1, L2 is for Q2, where W is transistor channel width, and L is transistor channel length; and $V_T$ is a threshold voltage of each MOSFET.

Transistors Q3 and Q4 are optional. These transistors may be at low voltages (e.g., off) during the write phase, and on during the erase phase.

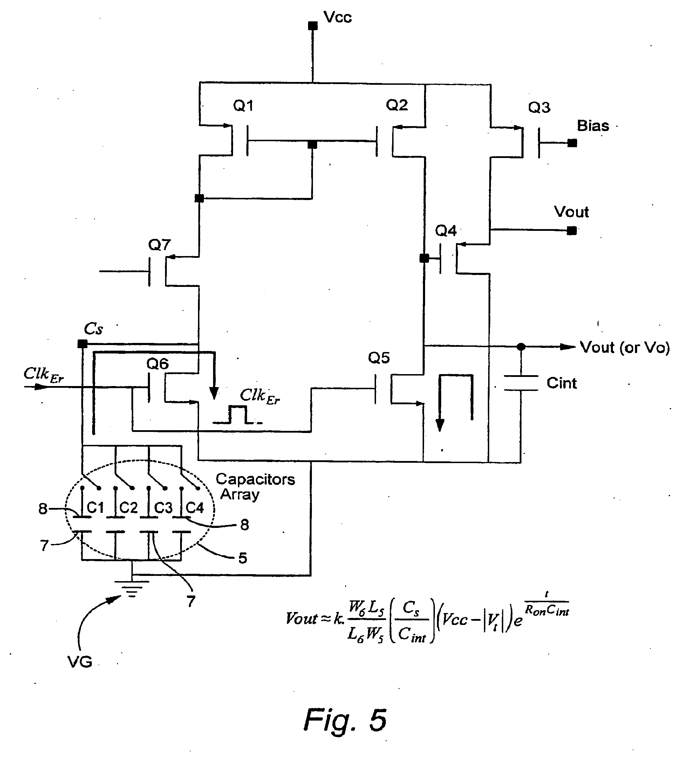

The output signal Vout (or Vo) of the Fig. 4 (and Fig. 5) sensing circuit is sigma-delta modulated. Sigma-delta modulators, which can be used in a sigma-delta digital-to-analog converter (DAC), can provide a degree of shaping or filtering of quantization noise which may be present. Example sigma-delta modulators that may be used are described in U.S. Patent Nos. 6,975,257, 6,972,704, 6,967,608, and 6,980,144. In certain examples of sigma-delta conversion, oversampling, noise shaping and/or decimation filtering may be brought to bear. Example advantages of sigma-delta modulation include one or more of: (i) analog anti-aliasing filter requirements are less complex and thus may be cheaper than certain example nyquist based systems; (ii) sample and hold circuitry may be used due to the high input sampling rate and low precision A/D conversion; (iii) since digital filtering stage(s) may reside behind the A/D conversion, noise injected during the conversion process such as power-supply ripple, voltage reference noise and noise in the A/D converter itself may be controlled; (iv) since the sigma-delta converter may be essentially linear it may not suffer from appreciable differential non-linearity and/or background noise level(s) may be independent of input signal level. Improved S/N ratios may be realized.

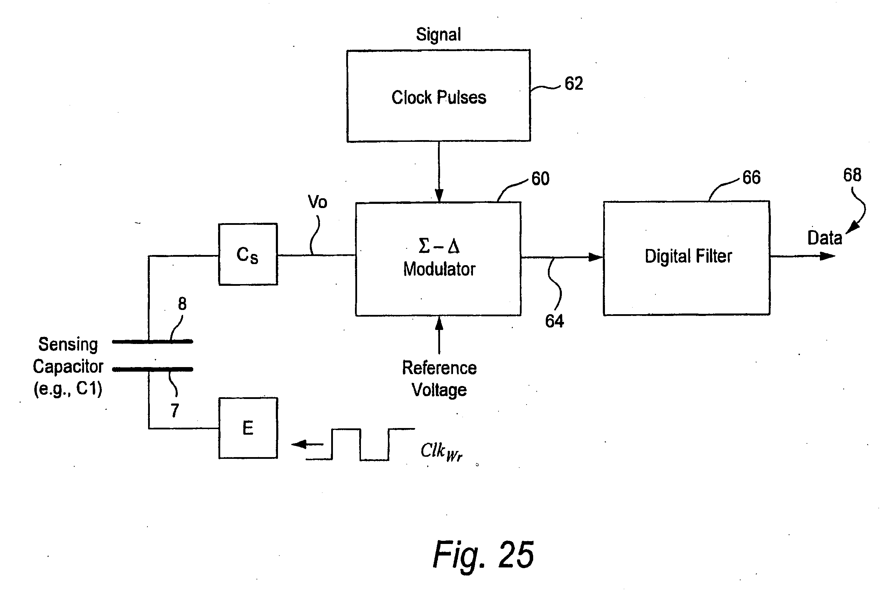

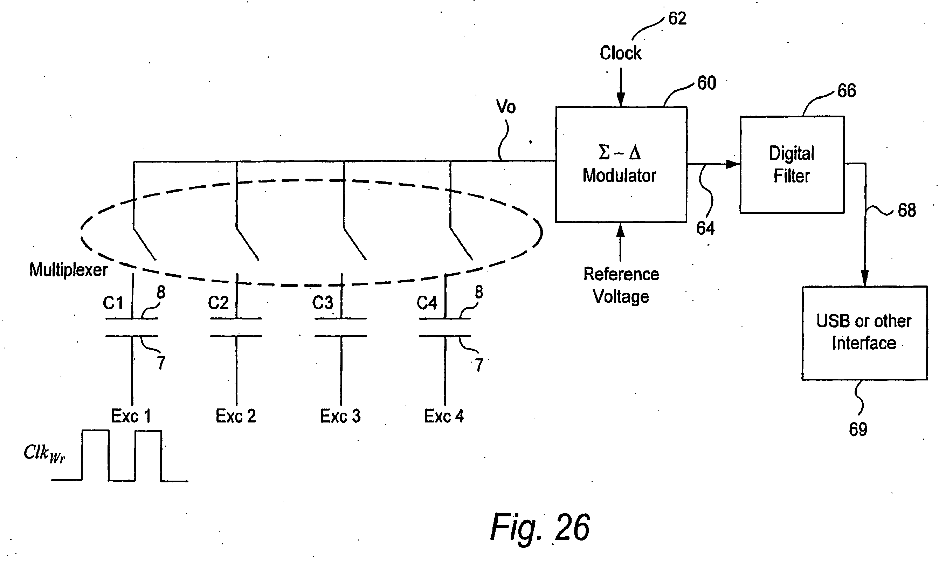

Fig. 25 which is a simplified version of a sigma-delta modulator system, for modulating and/or converting the output signal Vout (or Vo) of the Fig. 4 (and Fig. 5) circuit. In Fig. 25, a write pulse (see pulse at the bottom of Fig. 25), is used to charge the sensing capacitor (C1, C2, C3 or C4) as explained above with respect to Fig. 5. The square wave excitation (e.g., for writing and/or erasing cycles) is used on the sensing capacitor to charge and discharge it. This process is mirrored or mimicked, for $C_{int}$ as explained herein. The output signal Vout (or Vo) of the Fig. 4 circuit is sigma-delta modulated by sigma-delta modulator 60. The modulator 60 make take the form of a hardware circuit, firmware, and/or software. Clock pulses 62 from a clock are input to the modulator 60, which trigger the latch of a quantizer of the modulator 60. After the output signal Vout (or Vo) are sigma-delta modulated by modulator 60, the modulated signals 64 are forwarded to an optional digital filter 66 (e.g., lowpass filter or the like). Digital filter 66 processes the sigma-delta modulator digital output 64, which is a stream of 0s and 1s. The data is then scaled appropriately using calibration coefficient(s). The filtered data 68 is then read through a serial interface 69 or the like and sent to a computer which does the correlation calculations for chunks of data packets. Thus, the data from the interface 69 is then correlated (e.g., autocorrelated-and/or cross-correlated) as explained herein. Fig. 26 is similar to Fig. 25, except that Fig. 26 illustrates an array of sensing capacitors C1-C4 which are multiplexed via a multiplexer.

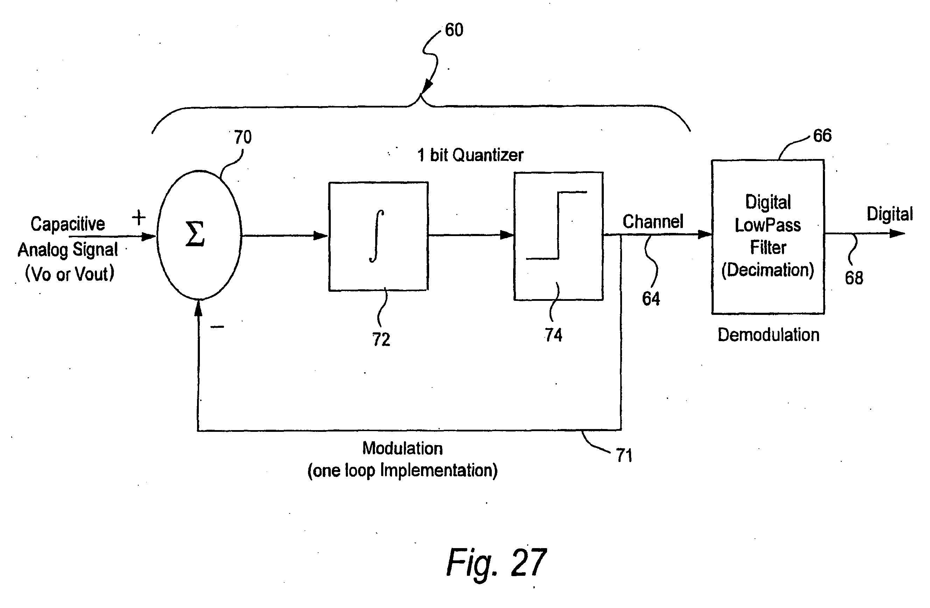

Fig. 27 is a block diagram illustrating an example of sigma-delta modulation which may be performed in the modulator 60 of Figs. 25-26. Again, this modulation may be performed by circuitry, firmware and/or soflware. The analog output signal Vout (or Vo) of the Fig. 4 (and Fig. 5) circuit is received by a summer 70 of the sigma-delta modulator 60. Summer 70 receives the analog Vout (or Vo) signal as well as a feedback signal from a feedback loop 71 of the modulator 60. The output of summer 70 is received by integrator 72 whose output is received by a quantizer 74 such as a one bit quantizer. The digital output 64 is then filtered 66 as explained above, and so forth. The sigma-delta modulation is advantageous in that it provides oversampling and allows noise such as EMI to be treated and its adverse effects reduced. In particular, the noise is spread by the sigma-delta modulation out over the frequency band so that the signal-to-noise (S/N) ratio can be improved.

Referring back to Fig. 4, each capacitor (C1, C2, C3, C4) is discharged before charging the next. The process of discharging each capacitor is described in connection with the erase pulse, with respect to Figs. 5-6.

Fig. 5 is a circuit diagram of the Fig. 4 sensing circuit, with respect to an erase cycle. During an erase cycle, a previously charged capacitor (C1, C2, C3 or C4) is discharged before the next write cycle. Fig. 6 includes example signals used during the erase cycle(s). No reading is performed during the erase phase, in certain example instances. During an erase cycle or phase, Q7 is turned off (the write pulse $Clk_{Wr}$ is not present), and transistors Q5 and Q6 are turned on by an erase pulse $Clk_{Er}$ (see also Fig. 6). Thus, the capacitor (C1, C2, C3 and/or C4) discharges to ground (e.g., V=0) or virtual ground (VG), as does $C_{int}$. Again, $C_{int}$ mimics the capacitance of the sensor Cs. Once the capacitances Cs and $C_{int}$ have been connected to ground and discharged, the erase pulse and cycle ends. Then, the next capacitor (C1, C2, C3 or C4) in the sequence can be prepared, charged, and read.

Thus, referring to Figs. 4-6, it will be appreciated that according to this invention a rain sensor comprises: a sensing circuit comprising at least first and second sensing capacitors (e.g., C1 and C2) that are sensitive to moisture on an external surface of a window, and at least one mimicking capacitor ($C_{int}$) that mimics at least charging and/or discharging of at least one of the first and second sensing capacitors; wherein a writing pulse ($Clk_{Wr}$) causes at least the first sensing capacitor (e.g., C1) to be charged, and an erasing pulse ($Clk_{Er}$) causes each of the first sensing capacitor (e.g., C1) and the mimicking capacitor ($C_{int}$) to substantially discharge; wherein presence of rain on the external surface of the window in a sensing field of the first sensing capacitor (e.g., C1) causes a voltage (see Vo or Vout) at an output electrode of the mimicking capacitor ($C_{int}$) to fluctuate in a manner proportional to fluctuation of voltage at an output electrode (8) of the first sensing capacitor (e.g.,C1), even though the rain is not present in a field of the mimicking capacitor ($C_{int}$); and wherein rain is detected based on an output signal (see Vo or Vout) from the output electrode of the mimicking capacitor ($C_{int}$), wherein the output signal is read at least between an end of the writing pulse ($Clk_{Wr}$) and a beginning of the erase pulse ($Clk_{Er}$) (see the "read" area in Fig. 6).

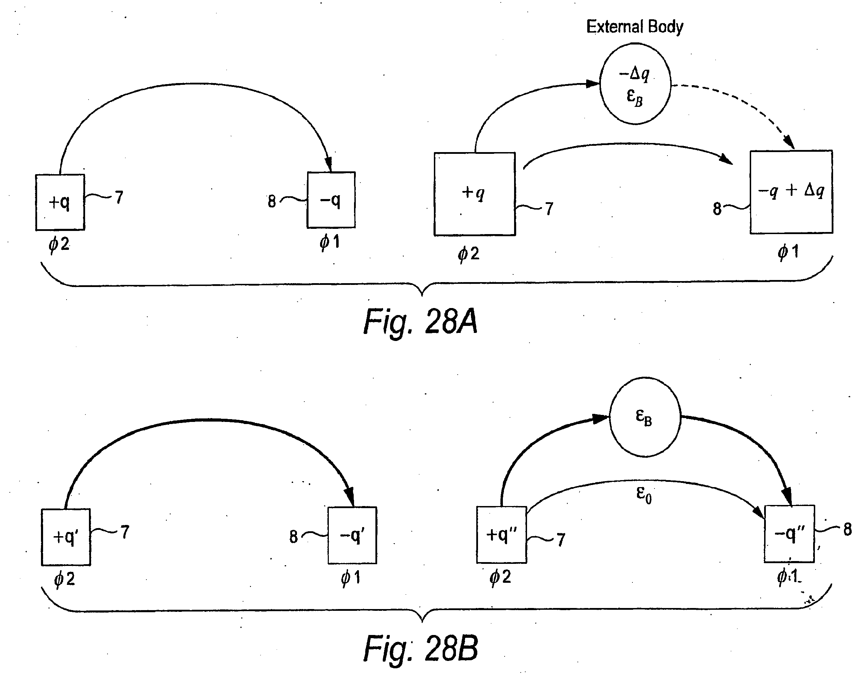

Still referring to Fig. 5, during the erase cycle, the erase pulse $Clk_{Er}$ causes the capacitor (C1, C2, C3 and/or C4) and thus also the mimicking capacitance $C_{int}$ to discharge to ground (e.g., a fixed potential such as V=0) (see the conventional ground symbol in Fig. 5). However, in other example embodiments of this invention, it has been found that a fixed ground can lead to certain problems. Thus, during the erase cycle the erase pulse $Clk_{Er}$ causes the capacitor (C1, C2, C3 and/or C4) and thus also the mimicking capacitance $C_{int}$ to discharge to a virtual ground VG that is floating (see VG and the ground symbol in Fig. 5). Stated another way, an electrode of each of capacitors C1-C4 is floating. It may be at a floating or reference potential/voltage. It has been found that a floating or virtual ground can be highly advantageous (e.g., a floating ground and/or capacitor electrode(s) can lead to a significant reduction in EMI interference problems). For example, such a floating or virtual ground may help reduce the chance of the sensor system being tricked by EMI interference. In this respect, reference is made to Figs. 28(a) and 28(b) (along with Fig. 5).

In Figs. 28(a)-(b), reference numerals 7 and 8 refer to the electrodes of a capacitor (e.g., C1, C2, C3 or C4). In these figures, "q" refers to charge and Φ refers to potential (Φ1 is different than Φ2). In Fig. 28(a) the capacitor (e.g., C1) is grounded at a fixed potential such as 0 volts (the charge at grounded electrode 7 is fixed at +q). In this respect, when the charge at grounded electrode 7 is fixed at +q, when one brings an external body $E_B$ (e.g., human finger with a higher dielectric constant) into a sensing area of the capacitor (e.g., touching the front surface of the windshield over the capacitor) this external body induces a change in charge -Δq and the other electrode 8 which is not fixed changes from a charge of -q to a charge of -q + Δq.in an attempt to balance charge. Thus, if one were to ground the capacitor at a fixed potential such as 0 volts, and read an output voltage of the capacitor, one would read charge changes caused by Δq which is not needed, and this may lead to false readings. Comparing Figs. 28(a) and 28(b), Fig. 28(b) illustrates an advantage of causing an electrode 7 of the sensing capacitor (e.g., any of C1-C4) to be floating (e.g., at a floating or virtual ground). In Fig. 28(b), the charge q at electrode 7 is not fixed. E.g., the charge at electrode 7 changes from +q' to +q'' when the external body cornes into contact with the windshield at a sensing area of the capacitor, thereby indicating the floating nature of the electrode. In Fig. 28(b), when the external body (e.g., human finger) is applied to the windshield over the capacitor sensing area the free charges on both electrodes 7 and 8 of the capacitor change. Thus, the adverse effect of Δq is eliminated or reduced by using the floating or virtual ground VG (electrode 7 is floating). In particular, when electrode 7 is floating as in Fig. 28(b), the external body ($E_B$) does not adversely affect summation of charge because adding the charges (+q'' and -q'') of the electrodes 7 and 8 when the external body is present gives zero or substantially zero. False readings due to EMI interference can also be reduced by using this floating feature. Thus, the floating nature may allow the absolute values of the charges q at capacitor electrodes 7 and 8 to be the same or substantially the same even when the external body is present since the electrode 7 is floating and is not fixed at ground. This is one example reason why it may be advantageous to cause the electrodes 7 of the capacitors C1-C4 to be floating, or be at a virtual ground VG as shown in Fig. 5. Thus, referring to Figs. 5 and 28, the sensing capacitors C1-C4 are floating and both electrodes thereof are isolated from ground. Accordingly, the rain sensor comprises at least one sensing capacitor (C1, C2, C3 and/or C4) that is sensitive to moisture on an external surface of a window, the sensing capacitor including a first capacitor electrode (8) that receives a charging signal and a second capacitor electrode (7) spaced apart from the first capacitor electrode (8); and wherein the second capacitor electrode (7) is floating so that the sensing capacitor is isolated from ground.

Fig. 6 is an exemplary timing diagram of signals applied to or read out from the Fig. 4-5 circuit during the write and erase modes/cycles. As noted above, the capacitors (C1-C4) are sequentially charged, read, quantized, and erased.

Fig. 6 shows a clock write ($Clk_{Wr}$) and erase ($Clk_{Er}$) pulse for each capacitor C1-C4, in sequence. Then, voltages are quantized and output. Variable output voltage Vo1-Vo4 correspond to capacitors C1-C4 respectively, and thus $C_{int}$. It is noted that the output signals Vo1-Vo4 in Fig. 6 are taken at $V_{out}$ (or Vo) in Figs. 4-5. Moreover, in Fig. 6, the output signals Vo are read or analyzed (e.g., for autocorrelation and/or cross-correlation) at the peak read areas (see "Read" in Fig. 6) of the output signals where the output signals are substantially stabilized and/or the capacitor saturated. In particular, the output signal $V_{out}$ (or Vo) in Fig. 6 for a particular capacitor (C1) is read in the "read area" after the end of the write pulse ($Clk_{Wr}$) for that capacitor, and before and/or up to the beginning of the erase pulse ($Clk_{Er}$) for that capacitor.

Still referring to Fig. 6, for example, a drop of water on the exterior surface of a windshield will affect the magnitude of the output signal(s) $V_{out}$ (or Vo). For instance, a water drop over the area of a given capacitor (e.g., C1) will cause the level of the output signal(s) $V_{out}$ (or Vo) for that capacitor in the "read" area of the signal to be higher compared to a situation where no such drop was present. The exact magnitude or level depends on the size of the water drop. With increasing water amounts, the magnitude of the signal at the "read" area gets higher because the dielectric constant of water is higher than that of glass and/or air and this causes the capacitance to increase. In a similar manner, if no water drop is present on the windshield over the area of a given capacitor (e.g., C1) then this will cause the level of the output signal(s) $V_{out}$ (or Vo) for that capacitor in the "read" area of the output signal to be lower compared to a situation where a drop was present.

The signals (e.g., from the capacitor(s)) may be converted from analog-to-digital via a sigma-delta modulation scheme or the like, which maybe implemented at the software level or in any other suitable manner such as via hardware. The principle behind sigma-delta architecture is to make rough evaluations of the signal, to measure the error, integrate it, and then compensate for that error. Data may be oversampled at a given rate of at least 32 kHz, e.g., more preferably 64 kHz, though it will be appreciated that other sampling rates may be used. The course quantization can be recovered by the sigma-delta modulation scheme to produce a simple binary 0 or 1 output, corresponding to on and off, respectively. Thus, the sigma-delta modulation scheme may be used to reduce noise (e.g., at the tail of the signal) and produce a digital output stream (e.g., 1s and 0s).

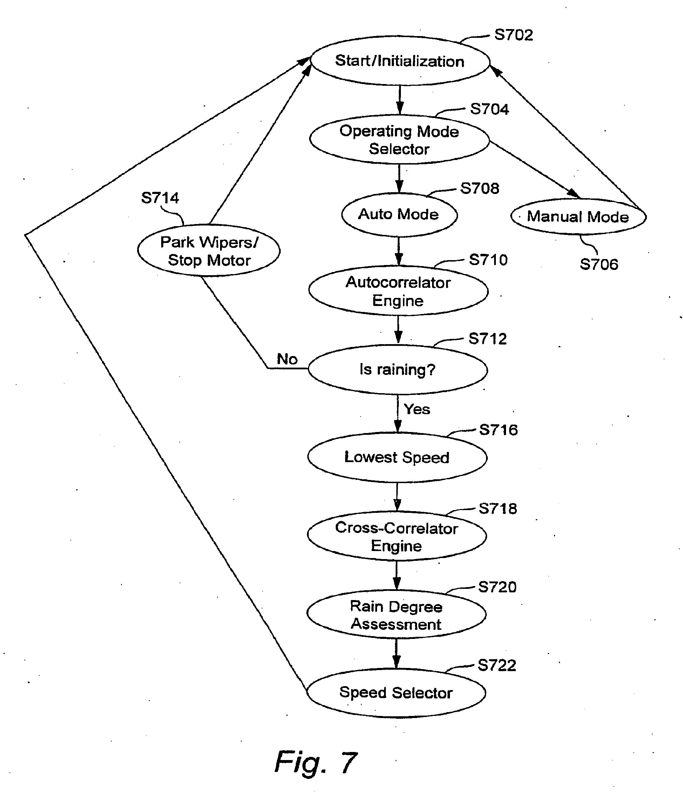

Before discussing the detailed operation of and example mathematics behind an example sensor algorithm, an overview of the states in which the sensor and/or wipers can take will be given in connection with FIG. 7, which is an exemplary state diagram showing how autocorrelation and cross-correlation data may be used to control vehicle wipers. The system begins in Start/Initialization State S702. In this state, all buffers are cleared in certain example instances. Based on the inputs of capacitors $C_1$, $C_2$, ..., $C_n$, analog-to-digital conversion of the signals from the respective inputs is accomplished via sigma-delta modulation. Data is read for the plurality of channels over time period T. Operating Mode Selector State S704 functions as a switch to select between the manual or automatic wiper mode. If Operating Mode Selector State S704 indicates that manual mode is selected, then in Manual Mode State S706 an auto mode may be disabled and a pre-existing manual mode enabled. Then, the system returns to Start/Initialization State S702. However, if Operating Mode Selector State S704 indicates that auto mode is selected, the automatic wiper mode is enabled in Auto Mode State S708.

In Autocorrelator Engine State S710, at least three computations are performed. First, a normalized autocorrelation is calculated for each signal input of the capacitive array. Second, the gradient of the autocorrelation is calculated. Third, the difference between the signal input and a reference non-disturbed signal ($\Delta_1$) may be calculated. This information is passed to 1s Raining? State S712, in which at least three conditions are checked to determine whether it is likely that it is raining, there is moisture on the windshield, etc. Likely indications of rain are that the gradient of the autocorrelation is greater than 1, all autocorrelation values are positive, and/or $\Delta_1$ is greater than some pre-defined threshold value t1. If these conditions are not met, the system moves to Park Wipers/Stop Motor State S714, where wipers are parked (if they are moving) or not actuated, and the motor is stopped (if it is engaged), and the system is returned to Start/Initialization State S702.

On the other hand, if all conditions are met (e.g., it is likely that there is an interaction of water, moisture or some other perturbation on the glass, etc.), the system moves to Lowest Speed State S716, in which the wiper motor is activated at the lowest speed available. In Cross-Correlator Engine State S718, the cross-correlation between the input signals from the capacitors is calculated. The cross-correlation curve shape is determined, and the symmetry of the two sides of the cross-correlation curve are checked for symmetry. As will be described below, these checks help, for example, to determine the type of perturbation (e.g., light rain, heavy rain, fog, snow, etc.) hitting the window (e.g., windshield). In Rain Degree Assessment State S720, the "degree of rain" (e.g., heavy, light, etc.) is determined. Based on this determination, the wiper motor is activated at the appropriate speed in Speed Selector State S722. Lastly, the system is returned to Start/Initialization State S702 to determine whether there is any change in conditions outside the car.

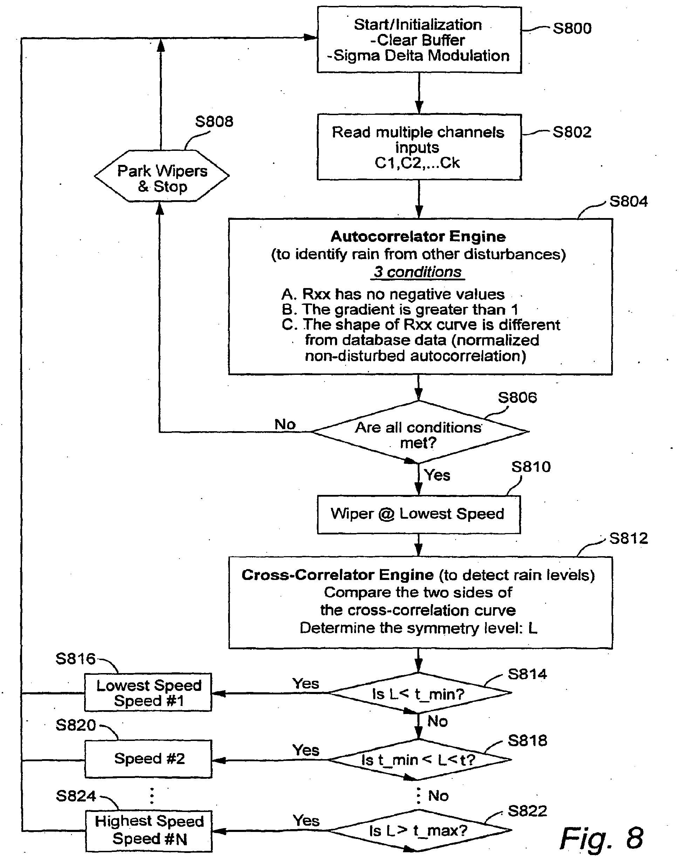

The steps performed by the rain sensor will be described in greater detail in connection with FIG. 8, which is an exemplary flowchart showing how autocorrelation and cross-correlation data can be used to control wipers. In FIG. 8, in step S800 buffers are cleared, and data outputted from the Fig. 4-5 circuit (e.g., from $C_{int}$, or from capacitors C1-C4) is sigma-delta modulated, and is read in S802.

The algorithm for determining whether to engage wipers and, if so, the speed at which to engage wipers begins by autocorrelating the sigma-delta modulated data in step S804. Autocorrelation may be used for analyzing functions or series of values, such as time domain signals. An autocorrelation is the cross-correlation of a signal with itself. Autocorrelation is used for finding repeating or substantially repeating patterns in a signal, such as, for example, determining the presence of a periodic signal buried under noise, identifying the fundamental frequency of a signal that does not actually contain that frequency component but implies within it with many harmonic frequencies, etc. Cross-correlation is a measure of the similarity of two signals, and it is used to find features in an unknown signal by comparing it to a known one; in other words it may be used to perform signal fingerprinting in certain instances. Cross-correlation is a function of the relative time between the signals. Digital signals from any two capacitors (e.g., C1 and C2) are cross-correlated, in close spatial proximity, and the system looks for any degree of correlation at time lags other than a time lag of zero. This spatio-temporal cross-correlation allows the system to extract patterns in how the falling rain is electrically projecting itself over the sensor array. As an example, the system may take the case of rain drops moving over one capacitor C1 at a time t0 and the same drop "ringing" another capacitor C4 (spatially separated by distance L from C1). If the drop moves at an average speed Vi, the time (t0+T), where T=L/Vi, the cross-correlation function will have another extremum or kink. The normalized magnitude of this extremum value may allow the system to determine the degree of rain falling on the sensor.

Each capacitor C1-C4 has an autocorrelation function associated with the digitized Vout resulting from the readout thereof (or the corresponding readout of $C_{int}$). The autocorrelation function depends on time difference, rather than on actual time. Computing autocorrelations is beneficial because it allows, for example, the deduction of the fundamental frequency irrespective of phase. Autocorrelations are advantageous over other methods, such as Fourier transforms (which may also be used ) which provide information about the underlying harmonics only. Thus, the use of autocorrelation of the readouts from capacitors C1-C4 (which as explained above, includes the corresponding readouts from mimicking $C_{int}$) can be used to detect and distinguish between beads of water, dirt, dust, droplets, downpour, etc.

It is noted that herein data from $C_{int}$, is considered to be data from the capacitors C1-C4 because the capacitance $C_{int}$ mimics or substantially mimics the capacitances C1-C4 as explained above. Thus, when we talk about receiving data from the capacitors (e.g., C1-C4), this covers and includes receiving data from capacitance $C_{int}$. In other words, the output from the Fig. 4-5 circuit is considered to be from the capacitors C1-C4, even though it is not taken directly therefrom.

Rain, as a function of time, may be represented by the following formula:

$$b(\bar{r}, t) = \begin{cases} 1 & \text{rain projects electrically} \\ 0 & \text{otherwise} \end{cases}$$

Essentially, *b* takes on a binary value indicating whether it is raining (1), or not (0). It will be appreciated that *b* is at least two bits, and that for sigma-delta modulation 24-bits may be used in certain example embodiments. It also will be appreciated that a scale could be introduced, potentially to capture more data related to the voltages in the capacitors C1-C4 (or $C_{int}$).

At the end of a sampling cycle *L*, for example, the output from the Fig. 4-5 circuit, e.g., from the array of four capacitors C1-C4 (or via $C_{int}$), ranges from 0000 to 1111, using binary digital data. A single bit turned on can initiate a single wipe in certain example instances. In the case when all bits are off (0000) or all bits are on (1111), then no wipes may be initiated in certain example instances, because likely there is nothing on the windshield, the car is completely submerged, etc., since all capacitors in the array would be reading the same which is not consistent with rain falling on a window. Thus, the most probable events where wipers will be needed are those in the range of 0001 t6 1110 (i.e., when the output from all capacitors in the array is not the same). When the data falls in this range, or even if it does not fall within this range, correlation functions (auto and/or cross correlation functions) may be performed using the following integral. It will be appreciated that the integral below can be rewritten in other forms, such as, for example, as a summation. The correlations between two drops over a large time period may be computed according to the following formula:

$$R_b(r_1, t; r_2, t_2) = \frac{1}{L} \int_0^L b(r_1, t_1 + t) b(r_2, t_1 + t) dt$$

$$R_b(r_1, t; r_2, t_2) = R_b(\Delta \bar{r}, \Delta t)$$

where $R_b$ is the correlation of a binary event, given as a function of the resistances $r_i$ at given times $t_i$; and *L* is a large sampling period during which a burst of data is captured. The sampling period *L* may be from about 10 to 100 ms, and more preferably from about 20-30 ms, which corresponds approximately to the frequency an average human eye can discern. $R_b$ also is equal to a function of the correlation of the changes in resistances across capacitors $\Delta\vec{r}$ and the change in time. When $\Delta\vec{r} = 0$, the autocorrelation value is determined since data from the same capacitor is being analyzed, and when $\Delta\vec{r} \neq 0$, cross-correlations are computed since correlation is performed on data from different capacitors.

These functions are subject to several example constraints and underlying assumptions. First,

$$\Delta\vec{r} = \vec{Vi}\,\Delta t\,.$$

This constraint essentially means that a drop of water or the like is moving at a given time scale. Second,

$$b(\vec{r} + \vec{Vi}\,\Delta t, t + \Delta t) = b(\vec{r}, t)\,.$$

This constraint mimics or substantially mimics what happens when drops of water or the like move from one capacitor to another. Thus, the correlation functions might be thought of as discrete steps $p$ in space and $T$ in time. This feature may be mathematically represented as the following equation:

$$R_b(m\vec{p}, nT) \equiv R(\vec{Vi}\,\Delta t, \Delta t)$$

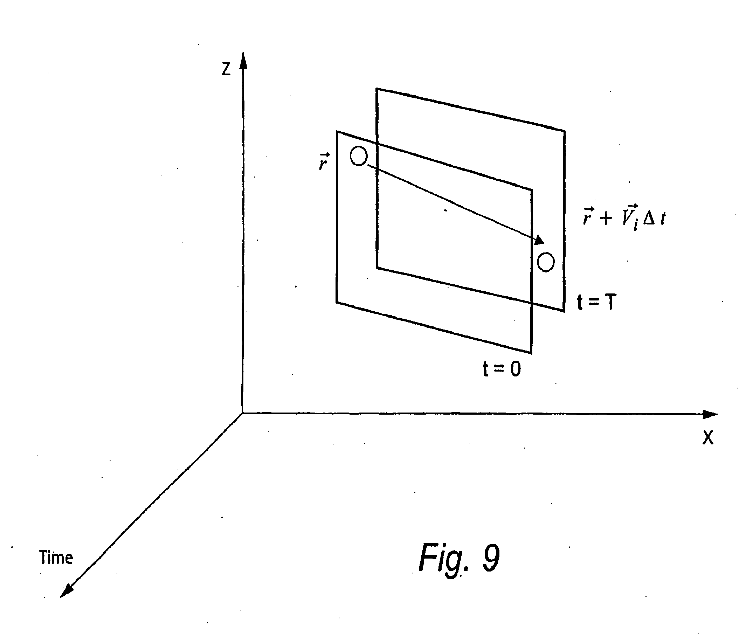

Essentially, the left-hand side of the equation establishes a theoretical grid in space and time across which a drop of water or the like moves. For example, Fig. 9 is an exemplary stylized view of how a rain droplet might travel across a windshield. Fig. 9 shows a rain droplet moving across a windshield on the X-Z plane during an initial time period (t=0) and some late quantum of time (t=T). The assumption that drop distribution is uniform over space and time allows the creation of a binary field caused by rain that is in a wide sense stationary. The system also assumes that the temporal correlation between preferred pixels in the same neighborhood is high in the direction of rain. Lastly, the degree of autocorrelation and cross-correlation in time quantifies rain fall and other disturbances.

It will be appreciated that computational time can be saved because of the nature of correlation matrices and the nature of rainfall. For example, correlation matrices may be symmetrical in certain example instances. Additionally, as another example, because rain tends to fall down from the sky and move up along a windshield, it may be sufficient to compare only capacitors that are disposed vertically relative to one another in cross-correlation, while ignoring horizontally adjacent capacitors.

After the autocorrelation has been performed in step S804 (e.g., using the equation(s) discussed above, or some other suitable correlation equation(s)), one or more checks may be performed to enhance the accuracy of the system. Examples of such checks (e.g., if the autocorrelated data Rxx has negative values, if a gradient is greater than one, and/or if the shape of a Rxx curve is different or substantially different from a normalized non-disturbed autocorrelation data stored in memory) are listed in the bottom part of the box for step S804 in Fig. 8. One, two or all three of these checks may be performed.

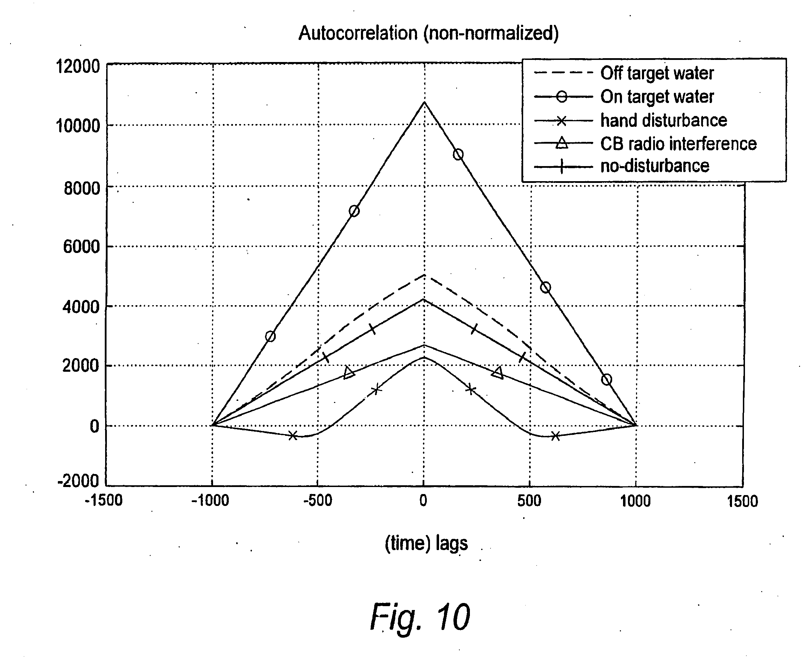

For example, one check of the autocorrelation data in step S806 may be to determine whether the autocorrelated data from one or more of the capacitor(s) (C1, C2, C3 and/or C4; or via mimicking $C_{int}$) comprises negative values. For instance, when the autocorrelated data has negative value(s), then the system or method may indicate that it is not raining, may park the wipers, and/or may not actuate windshield wipers (see step S808). This check is for determining, for example, whether a detected disturbance is actually rain. In this respect, Fig. 10 is a graph plotting example experimentally-obtained maximum values of non-normalized autocorrelations for different disturbances. Fig. 10 illustrates that water signals are greater than non-disturbed signals and are positive, and that external interferences such as electromagnetic waves from CB radios and human hand touching of a window tend to be below the no-disturbance levels and may be negative. Thus, to eliminate or reduce false detections due to external disturbances such as, for example, a human hand touching the window, radio signal interference, etc., any signal with negative autocorrelation values is considered a "no-rain" event. It will be appreciated that one may consider negative autocorrelation values. Other measures to eliminate or reduce false detections due to external interferences are, for example, comparing gradients (e.g., any curve lower or less than the no-disturbance curve/plot of Fig. 10 may be considered a "no-rain" event), shielding capacitors, etc.

A second example check of the autocorrelation data is to check whether a gradient of an autocorrelation curve associated with the autocorrelated data is greater than one; and if not then the system or method may indicate that it is not raining, park the wipers and/or not actuate wipers of the vehicle (see step S808). In this check, the gradient of the normalized autocorrelation of the disturbance is checked. The gradient of the normalized autocorrelation of a non-disturbed signal is close to 1. Measuring the gradient is beneficial because it is not affected by temperature change. Thus, the rain sensor may be substantially immune to false reads due to temperature changes. In certain example instances, gradients less than 1 (or some other predetermined value) may be considered no-rain events.

A third example check of the autocorrelation data is to determine whether there is a match or substantial match between an autocorrelation curve associated with the autocorrelated data and one or more predetermined autocorrelation curve(s) stored in a database and/or memory. When the shape of the autocorrelation curve associated with the autocorrelated data from the Fig. 4-5 circuit is different or substantially different from an autocorrelation curve relating to normalized non-disturbed autocorrelation data, this may be considered a no-rain event and it may be indicated that it is not raining, wipers may be parked, and/or wipers may be not actuated (see step S808). However, when there is a match or substantial match between the autocorrelation curve associated with the autocorrelated data from the Fig. 4-5 circuit and a predetermined autocorrelation curve associated with moisture such as rain, then it may be indicated that it is raining, wipers may actuated, or kept moving.

In this regard, the shape of the autocorrelation curve may be used to reduce false wipes and/or false detections. In particular, the normalized autocorrelation of a non-disturbed signal is used as a reference. Then, the normalized autocorrelation of each signal captured from the Fig. 4-5 circuit is compared to the reference to identify the closest fingerprint in certain example instances. Generally, the more water present in the sensing area, the larger the difference between the reference signal and the observed signal. In this way, correlation snapshots can be compared to reference snapshots of well-known events such as the presence of rain, dirt, no-disturbance, ice, and so forth. In general, correlation snapshots may be normalized, though the invention is not so limited. Correlation snapshots preferably plot r-values versus quantums of time over a discrete time interval.

When there is a match or substantial match between the autocorrelation curve associated with the autocorrelated data from the Fig. 4-5 circuit and a predetermined autocorrelation curve associated with a non-moisture substance such as dirt, then this may be considered a no-rain event and it may be indicated that it is not raining, wipers may parked and/or not actuated (see step S808).

Thus, it will be appreciated that the shape of the autocorrelation curve resulting from the data output from the Fig. 4-5 circuit (from the capacitors C1-C4, or via $C_{int}$) may be used to reduce false wipes as a third condition. For instance, a normalized autocorrelation curve of a non-disturbed signal may be used as a reference. Then, the normalized autocorrelation of each signal captured from the Fig. 4-5 circuit is compared to the reference to identify the closest fingerprint. Generally, the more water present in the sensing area, the larger the difference between the reference signal and the observed/detected signal. In this way, correlation snapshots can be compared to reference snapshots of well-known events. In general, correlation snapshots preferably are normalized, though the invention is not so limited. Correlation snapshots preferably plot r-values versus quantums of time over a discrete time interval.

A potential problem with capacitive rain sensors is that rapid temperature changes (e.g., due to the radiation absorbing black frit used to cosmetically hide the sensor pattern) change the dielectric "constant" (permittivity) of the glass. This is then registered as a capacitance change and may erroneously be interpreted as a rain signal. However, a normalized autocorrelation function is unchanged, or substantially unchanged, for different temperatures even though there may be differences for the non-normalized autocorrelation functions for the different temperatures. Thus, the sensing system is unaffected or substantially unaffected by temperature changes.

In addition, extremely slow accumulation of water like ultra-fine mist can slowly build up to a level that triggers sensors based on Nyquist rate converters. In the time of observation that concerns human vision (e.g., 30-60 Hz), the autocorrelation function is able to discriminate between the ultra-slow accumulation of dew or condensation and normal mist and rain.

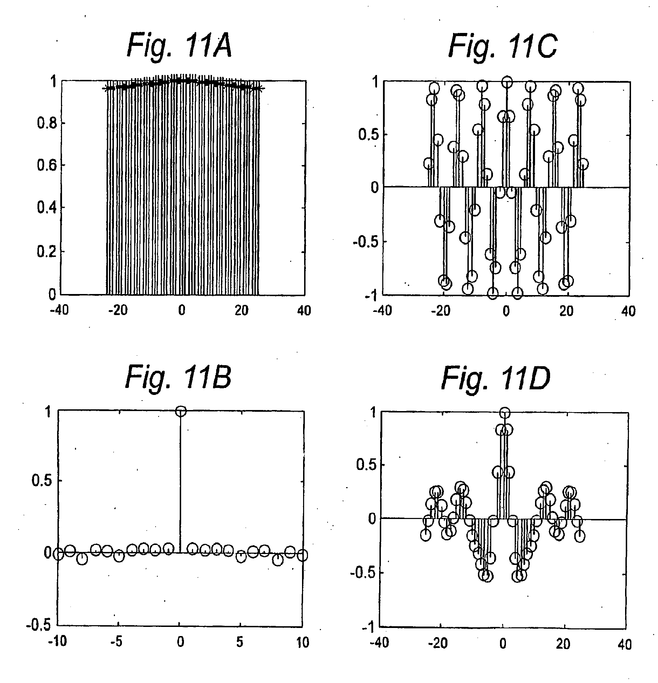

Figs. 11A-11D provide sample experimentally-obtained correlation snapshots. These correlation snapshots, or fingerprints of an event, can be stored as reference fingerprints or correlation curves. Observed/detected correlation snapshots (e.g., autocorrelation curves) can be compared to these reference fingerprints to determine the type of event occurring. For instance, Fig. 11A is an experimentally-obtained autocorrelation snapshot indicative of heavy rain. Fig. 11B is an experimentally-obtained autocorrelation snapshot indicative of a light mist. Fig. 11C is an experimentally-obtained autocorrelation snapshot indicative of CB radio interference. Fig. 11D is an experimentally-obtained autocorrelation snapshot indicative of a grounded body with a voltage. It will be appreciated that these fingerprints are provided as non-limiting examples and reflect experimentally-obtained data. Actual events may differ in various characteristics. Thus, in certain example embodiments of this invention, when it is determined that there is a match or substantial match between the autocorrelation curve associated with the autocorrelated data from the Fig. 4-5 circuit and a predetermined non-moisture autocorrelation curve such as that of Fig. 11C or Fig. 11D, then this may be considered a no-rain event and it may be indicated that it is not raining, wipers may parked and/or not actuated (see step S808). However, , when it is determined that there is a match or substantial match between the autocorrelation curve associated with the autocorrelated data from the Fig. 4-5 circuit and a predetermined moisture-related autocorrelation curve such as that of Fig. 11A or Fig. 11B, then this may be considered a rain event and it may be indicated that it is raining, wipers may actuated and/or kept moving. In addition to the predetermined autocorrelation curves of Figs. 11A-11D, other reference fingerprints may be stored and/or compared with observed correlation snapshots.

Turning back to Fig. 8, in step S806 it is determined whether each of the three conditions set forth in the bottom portion of the S804 box is met. In particular, it is determined in S806 whether each of the following is met: (a) the autocorrelated data has no negative values; (b) a gradient of an autocorrelation curve associated with said autocorrelated data is greater than a predetermined value such as one; and (c) the shape of the autocorrelation curve associated with the autocorrelated data from the Fig. 4-5 circuit is different than a predetermined autocorrelation curve associated with non-disturbed autocorrelation data. If they are not all met, this is an indication of a non-rain event and the process moves to step S808 where the vehicle wiper(s) are parked (if they were moving) or are kept off, and begins initialization S800 again. However, if all of these requirements are met in S806, then the process moves to S810 and the vehicle's wipers (e.g., windshield wipers) are activated at their lowest speed.

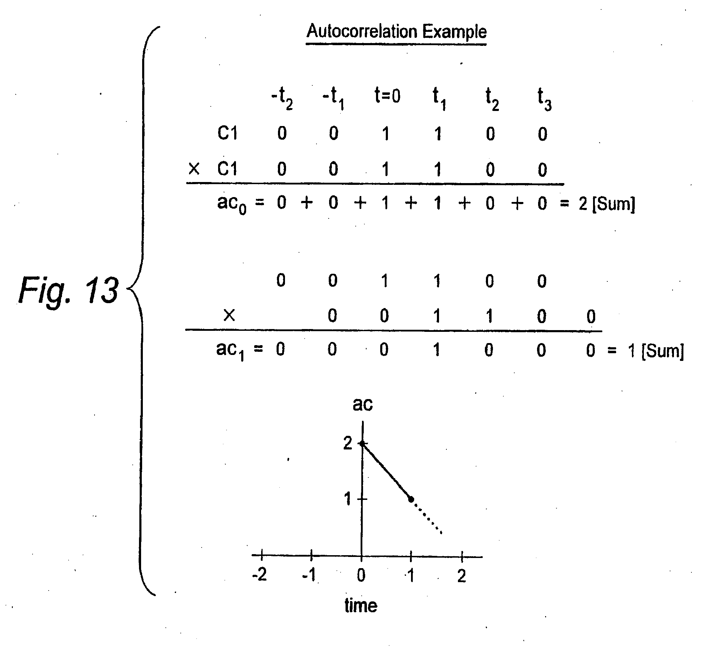

For purposes of example only, and understanding, Fig. 13 illustrates an example of autocorrelation. In Fig. 13, the values from (or relating to) sensing capacitor C1 are, at sequential times -t2, -t1, t0, t1, t2 and t3 are 0, 0, 1, 1, 0 and 0, respectively. Autocorrelation for time 0 (aco) is determined by multiplying the values relating to C1 in a non-offset manner, and then adding or summing the results. It can be seen in Fig. 13 that aco is equal to 2 in this instance. Thus, on the autocorrelation graph at the bottom of Fig. 13, an entry in the graph at time 0 is made for an autocorrelation value of 2. Note that the autocorrelation graph at the bottom of Fig. 13 is similar, but simpler, that the autocorrelation graph in Fig. 10 and the autocorrelation values may be obtained for Fig. 10 in a like manner. Next, still referring to Fig. 13, autocorrelation is performed using the capacitance values relating to C1 for the next point in time to obtain autocorrelation value acl. This next autocorrelation value (acl) is obtained by shifting the bottom row sequence of values for Cl relative to the top row as shown in Fig. 13, and then multiplying the values in the rows which line up with each other and summing the results, Fig. 13 illustrates that acl is equal to 1 for time 1. Thus, this autocorrelation value of I for time t1 may be entered in the graph at the bottom of Fig. 13 and a line is drawn between the two entered data points for purposes of example and understanding. The, for the next time value (or lag), the bottom row is again shifted another segment over relative to the top row and the process repeated, and so forth. It can be seen that the autocorrelation plots in Fig. 10 may be obtained in a similar manner. In Fig. 13, it will be appreciated that cross-correlation may be performed by replacing the C1-related values in the bottom row with values from or related to another capacitor such as C2 (or C3 or C4).

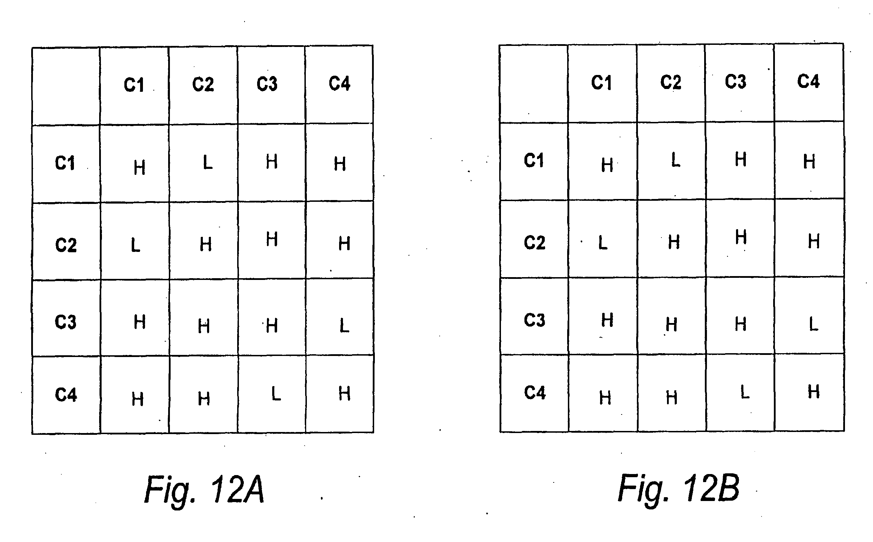

Examining autocorrelation and/or cross-correlation also can help distinguish between, for example, light rain and heavy rain. For example, if only the autocorrelation in time is high (and crosscorrelation is low), then there probably is only light rain. Fig. 12A is an exemplary correlation matrix showing light rain. Of note in Fig. 12A is that the correlations between C1 and C1, C2 and C2, C3 and C3, and C4 and C4 (these are autocorrelations) over a given time period are high, while the rest of the correlations (the cross-correlations) are low. By hypothesis and confirmed experimental data, a matrix of this sort would indicate a light rain.

On the other hand, if both autocorrelation and cross-correlation in time between capacitor signals are high, there is probably fast rain. Fig. 12B is an exemplary correlation matrix showing heavy rain. In Fig. 12B, not only are the autocorrelations of individual capacitors high (i.e., the autocorrelations are the correlations between C1 and C1, C2 and C2, C3 and C3, and C4 and C4), cross-correlations between different capacitors also are generally high (the correlations in Fig. 12B going diagonally from the upper-left to the bottom-right are the autocorrelations, and the rest are the cross-correlations). By hypothesis and confirmed experimental data, a matrix of this sort would indicate a fast rain. The degree of cross-correlation can be quantized to determine the relative speed of the rain. This data can, in turn, be used to trigger various wiper speeds, as appropriate for the speed of the rain. For instance, the more cross correlations that are high, the higher the wiper speed to be used.

More systematically, in step S812, cross-correlations are computed (correlations between data relating to different capacitors), and the two sides of the cross-correlation curve are used to determine a symmetry level L. If the symmetry level is lower than a predefined threshold $t_{min}$, step S814 directs the system to step S816 where wipers are activated at the lowest speed, and the system is returned to initialization step S800. If the symmetry level is greater than $t_{min}$ but less than an arbitrary value t, step S818 directs the system to step S820 where wipers are activated at a faster or medium speed, and the system is returned to initialization step S800. It will be appreciated that a plurality of arbitrary values $t_i$ may be specified, and a symmetry level falling between $t_i$ and $t_i+_1$ will activate an appropriate corresponding wiper speed and then return the system to initialization step S800. Finally, in step S822, if the symmetry level is above a predefined level $t_{max}$, step S822 directs the system to step S824 where wipers are activated at the highest speed, and the system is returned to initialization step S800. Thus, correlations from the data output from the Fig. 4-5 circuit can be used to adjust wiper speed. The more cross correlations that are high, the higher the wiper speed to be used due to the likelihood of heavier rain.

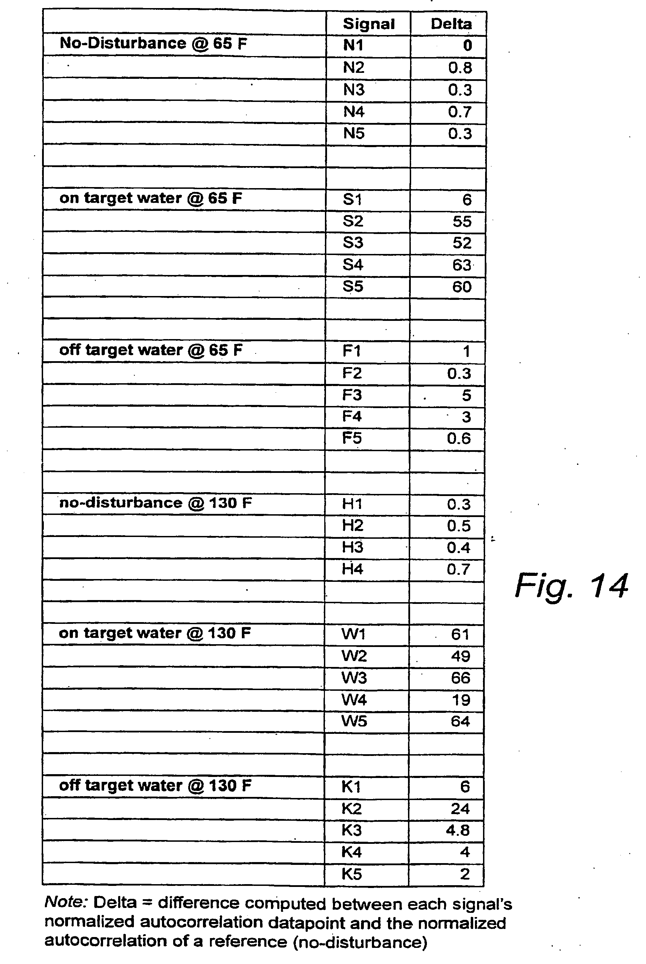

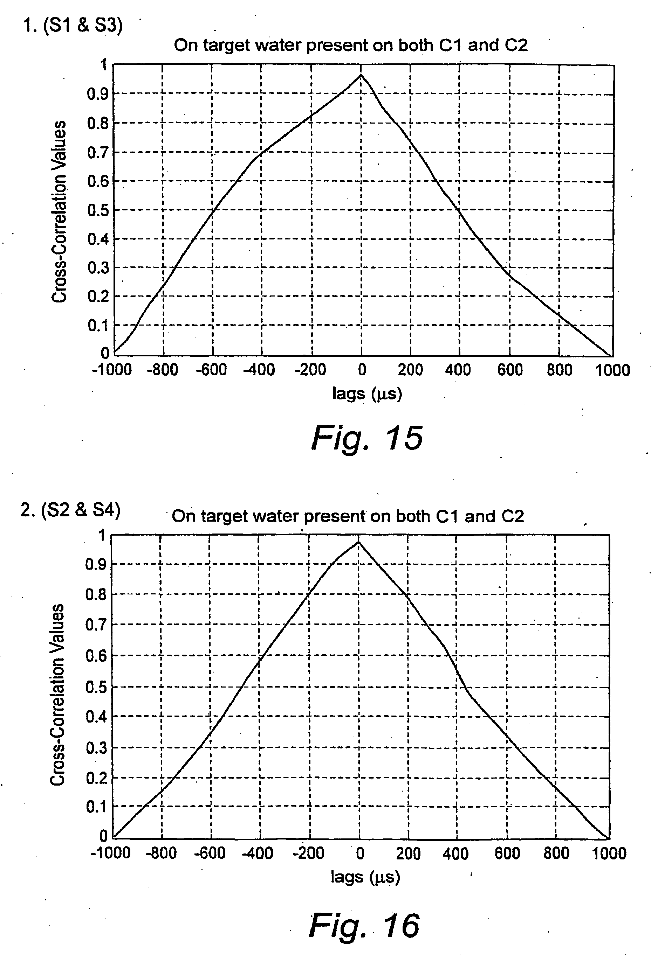

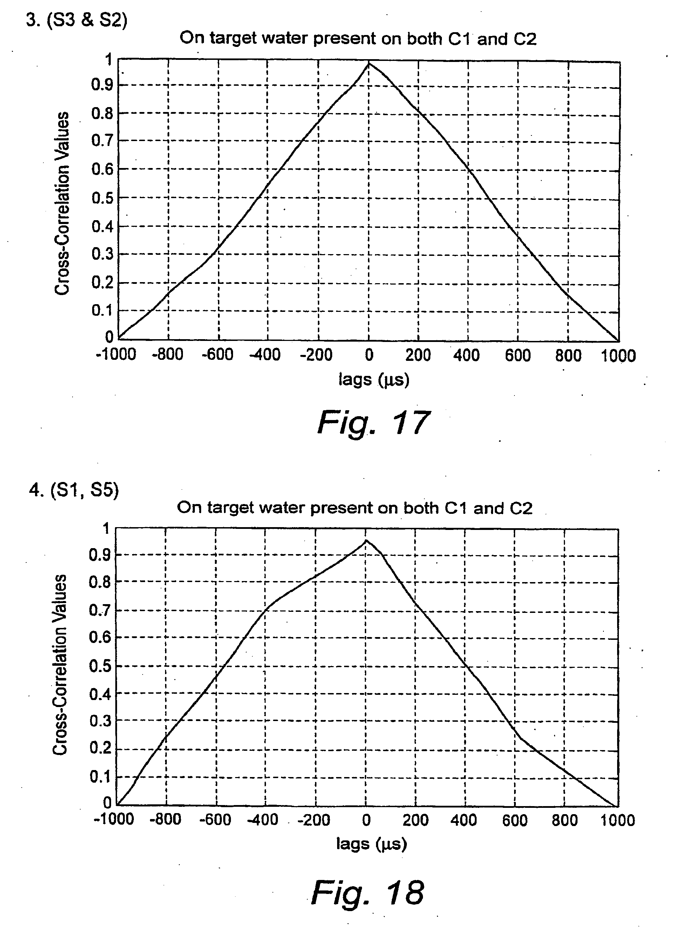

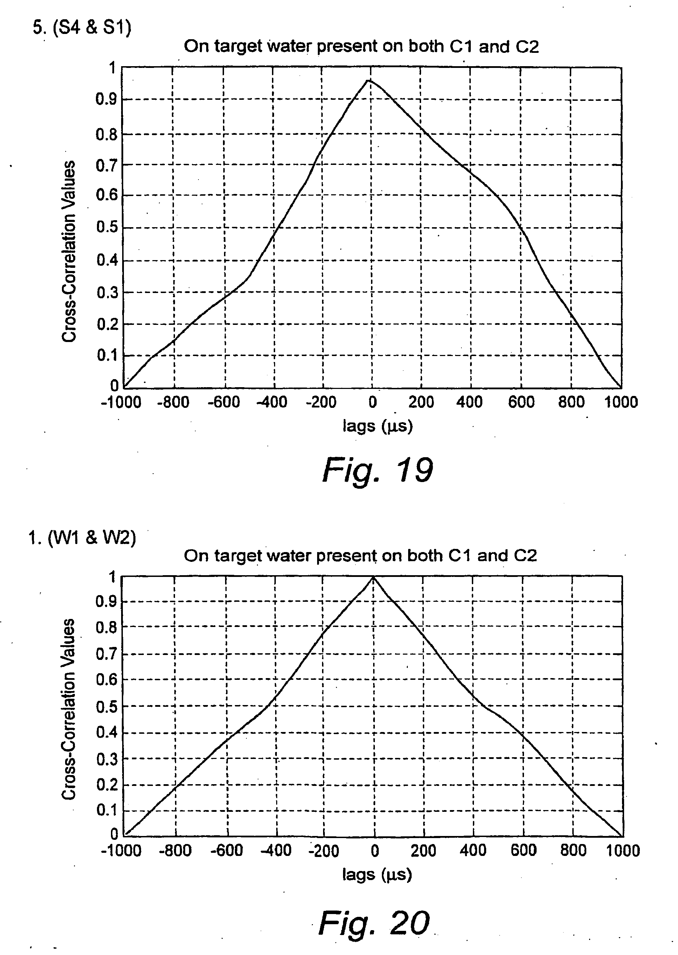

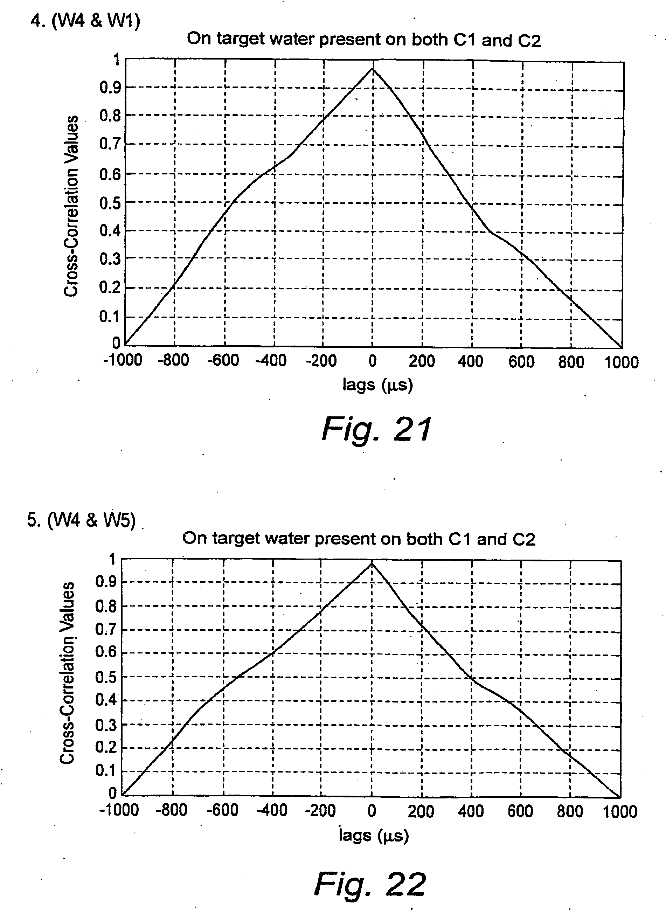

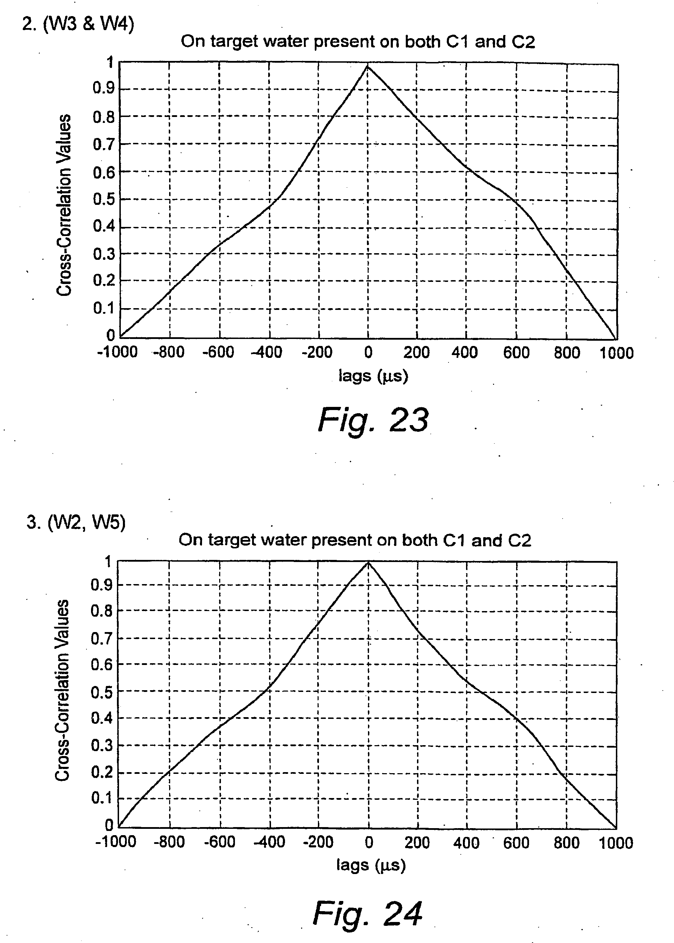

For purposes of example and understanding, Figs. 14-24 illustrate examples of cross-correlation. Fig. 14 sets forth cross-correlation data in certain example instances, whereas Figs. 15-24 illustrate cross-correlation graphs of certain of the data from Fig. 14 where rain is detected. In Figs. 15-24, each lag on the horizontal axis is one microsecond (1 μs) for purposes of example, and sampling was performed every one microsecond. As explained above with respect to Fig. 13, in Fi gs. 15-24 at time = 0 (lag 0), there is no shift in time of the values from the different capacitors being correlated. Fig. 14 illustrates that when rain was present (see signals S1-S5 and Wl-W5), the delta signals relating to autocorrelation were high. Figs. 15-24 are cross-correlation plots relating to these signals. It is helpful to look for symmetry between the plots on the left and right hand sides of each of Figs. 15-24 (one side of zero is compared to the other side of zero). Generally speaking, if there is symmetry about the zero lag axis, there is not much cross-correlation which indicates that the detected rain is not very hard. However, if there is asymmetry about the zero lag axis, then this means more cross-correlation and indicates that the rain is hard or harder. For example, note the asymmetry in Figs. 18, 19 and 23 about the zero lag axis due to the bumps or valleys on one or both sides. More cross-correlation indicates that the rain drops are moving from one capacitor's sensing area to another capacitor's sensing area. In this respect, each interaction of a rain drop and the surface of a windshield has its own correlation signature in the time domain. High cross-correlation indicates that the same drop is being detected at different capacitors, at different points in time (e.g., see Fig. 9 also). It is noted that the lower case "t" in Fig. 9 is the same as the lags axis in Figs. 15-24.

Thus, the rain sensor can detect rain or other material on a vehicle window or other type of window or sheet/ surface, without the need for a reference capacitor. Spatial temporal correlation may be used. All capacitors, or a plurality of capacitors, in the sensing array may be identical or substantially identical in shape in certain example embodiments. For purposes of example, at a given point in time (e.g., tl), the system may compare C1-relates values with C2 related values, and/or other capacitor related values. For this time tl, the system may also compare C1-related values with itself (autocorrelation), and may also compare autocorrelation for C1 with autocorrelation for C2 and/or other sensing capacitor (s).

**Claims**

1. A rain sensor comprising:

    a sensing circuit comprising at least first and second sensing capacitors (C1, C2) that are sensitive to moisture on an external surface of a window (1; 10); **characterised by** the sensing circuit further comprising at least one mimicking capacitor ($C_{int}$) that mimics charging and discharging of at least the first sensing capacitor; wherein a writing pulse causes each of the first sensing capacitor (C1) and the mimicking capacitor ($C_{int}$) to be charged, and an erasing pulse causes each of the first sensing capacitor (C1) and the mimicking capacitor ($C_{int}$) to substantially discharge; wherein presence of rain on the external surface of the window in a sensing field of the first sensing capacitor (C1) causes a voltage at an output electrode of the mimicking capacitor ($C_{int}$) to fluctuate in a manner proportional to fluctuation of voltage at an output electrode of the first sensing capacitor (C1), even though the rain is not present in a field of the mimicking capacitor; and wherein rain is detected based on an output signal from the output electrode of the mimicking capacitor, wherein the output signal is read at least between an end of the writing pulse and a beginning of the erase pulse.

2. The rain sensor of claim 1, wherein the output signal from the output electrode of the mimicking capacitor ($C_{int}$) is converted from analog to digital, and thereafter is subjected to processing for determining whether rain is present on the external surface of the window, and wherein said processing preferably comprises autocorrelation and/or cross-correlation.

3. The rain sensor of claim 1, wherein the sensing circuit comprises an array of sensing capacitors (C1, C2, C3, C4), and wherein the mimicking capacitor ($C_{int}$) mimics each of the sensing capacitors in the array which are sequentially charged and discharged.

4. The rain sensor of claim 1, wherein electrodes of the first and second sensing capacitors (C1, C2) are floating so that the sensing capacitors are electrically isolated from ground.

5. The rain sensor of claim 1, wherein the first and second sensing capacitors (C1, C2) have fractal geometry.

6. The rain sensor of claim 1, wherein the mimicking capacitor ($C_{int}$) is physically separated from the sensing capacitors (C1, C2), and wherein the writing pulse causes the first sensing capacitor (C1), but not the second sensing capacitor (C2), to charge and also causes the mimicking capacitor ($C_{int}$) to charge.

7. The rain sensor of claim 1, further comprising:

means for correlating data from the mimicking capacitor ($C_{int}$) that is related to at least one of the sensing capacitors to obtain correlated data;

means for determining, based at least on the correlated data, whether rain is present on an exterior surface of the window; and

wherein said correlating is autocorrelating and/or cross-correlating.

8. The rain sensor of claim 1, wherein each of the first and second sensing capacitors (C1, C2) comprise first and second spaced apart electrodes (7, 8) that are substantially coplanar with one another.

9. The rain sensor of claim 1, wherein the writing pulse is supplied to a gate of a first transistor (Q1) that is electrically connected to the first sensing capacitor (C1), and the erasing pulse is applied to respective gates of second and third transistors (Q2, Q3) that are electrically connected to the first sensing capacitor and the mimicking capacitor ($C_{int}$) respectively.

10. A method of detecting rain on a surface of a window (1;10), the method comprising:

supplying first and second spaced apart writing pulses which respectively cause first and second sensing capacitors (C1, C2) of a sensing circuit to charge, wherein the first sensing capacitor charges when the second sensing capacitor is substantially discharged, and the second sensing capacitor charges when the first sensing capacitor is substantially discharged, so that the first and second sensing capacitors are charged at different times;

each of the first and second sensing capacitors being sensitive to moisture on the surface of the window;

supplying a first erasing pulse, between times of the first and second writing pulses, the first erasing pulse causing the first sensing capacitor to substantially discharge, and supplying a second erasing pulse after the second writing pulse wherein the second erasing pulse causes the second sensing capacitor to substantially discharge;

wherein a magnitude of an output of the sensing circuit is affected by presence of rain on the surface of the window;

converting an analog output signal of the sensing circuit to a digital signal and based on the digital signal determining whether rain is present on the surface of the window;

wherein the sensing circuit further comprises at least one mimicking capacitor ($C_{int}$) that mimics charging and discharging of at least one of the first and second sensing capacitors, and the presence of rain on the surface of the window in a sensing field of the first sensing capacitor causes a voltage at an output electrode of the mimicking capacitor to fluctuate in a manner proportional to fluctuation of voltage at an output electrode of the first sensing capacitor, even though the rain is not present in a field of the mimicking capacitor; and

detecting rain based on an output signal from the output electrode of the mimicking capacitor.

11. The method of claim 10, wherein each of the first and second sensing capacitors comprise first and second spaced apart electrodes (7, 8) that are substantially coplanar with one another and which are supported by the window.

12. The method of claim 10, wherein the writing pulses are supplied to a gate of a first transistor (Q1) that is electrically connected to at least one of the sensing capacitors (C1, C2, C3, C4), and the erasing pulses are applied to respective gates of second and third transistors (Q2, Q3).

13. The method of claim 10, further comprising:

correlating data of the digital signal to obtain correlated data;

determining, based at least on the correlated data, whether rain is present on the surface of the window; and

wherein said correlating is autocorrelating and/or cross-correlating.

**Patentansprüche**

1. Ein Regensensor, umfassend:

eine Detektorschaltung, umfassend zumindest erste und zweite Detektorkondensatoren (C1, C2), die auf Feuchtigkeit auf einer äußeren Oberfläche eines Fensters reagieren (1; 10) können; **dadurch gekennzeichnet, dass** die Detektorschaltung weiter zumindest einen nachahmenden Kondensator ($C_{INT}$) aufweist, der ein Laden und Entladen von zumindest dem ersten Detektorkondensator nachahmt;

wobei ein Schreibpuls veranlasst, dass sowohl der erste Detektorkondensator (C1) und der nachahmende Kondensator ($C_{INT}$) geladen werden, und ein Löschpuls veranlasst, dass sowohl der erste Detektorkondensator (C1) und der nachahmende Kondensator ($C_{INT}$) im Wesentlichen entladen werden;

wobei die Anwesenheit von Regen auf der äußeren Oberfläche des Fensters in einem Detektorfeld des ersten Detektorkondensators (C1) eine Spannung an einer Ausgangselektrode des nachahmenden Kondensators ($C_{INT}$) dazu bringt, in einer Weise zu schwanken, die proportional der Schwankung der Spannung an einer Ausgangselektrode des ersten Detektorkondensators (C1) ist, selbst wenn der Regen nicht in einem Feld des nachahmenden Kondensators vorhanden ist; und

wobei Regen basierend auf einem Ausgangssignal von der Ausgangselektrode des nachahmenden Kondensators detektiert wird, wobei das Ausgangssignal zumindest zwischen einem Ende des Schreibpulses und einem Beginn des Löschpulses gelesen wird.

2. Der Regensensor nach Anspruch 1, wobei das Ausgangssignal von der Ausgangselektrode des nachahmenden Kondensators ($C_{INT}$) von analog zu digital konvertiert wird, und danach einer Verarbeitung unterzogen wird, um zu bestimmen, ob Regen auf der äußeren Oberfläche des Fensters vorhanden ist, und wobei diese Verarbeitung vorzugsweise eine Autokorrelation und/oder Kreuzkorrelation umfasst.

3. Der Regensensor nach Anspruch 1, wobei die Detektorschaltung eine Anzahl von Detektorkondensatoren (C1, C2, $C_3$, $C_4$) umfasst, und wobei der nachahmende Kondensator ($C_{INT}$) jeden der Detektorkondensatoren in der Anordnung nachahmt, die sequenziell geladen und entladen werden.

4. Der Regensensor nach Anspruch 1, wobei Elektroden der ersten und zweiten Detektorkondensatoren (C1, C2) potentialfrei sind, so dass die Detektorkondensatoren elektrisch von der Erde isoliert sind.

5. Der Regensensor nach Anspruch 1, wobei die ersten und zweiten Detektorkondensatoren (C1, C2) fraktale Geometrie aufweisen.

6. Der Regensensor nach Anspruch 1, wobei der nachahmende Kondensator ($C_{INT}$) physisch von den Detektorkondensatoren (C1, C2) getrennt ist, und wobei der Schreibpuls den ersten Detektorkondensator (C1) dazu veranlasst, jedoch nicht den zweiten Detektorkondensator (C2), zu laden und auch den nachahmenden Kondensator ($C_{INT}$) dazu veranlasst, zu laden.

7. Der Regensensor nach Anspruch 1, weiter aufweisend:

Mittel, um Daten von dem nachahmenden Kondensator ($C_{INT}$) zu korrelieren, die zumindest einem der Detektorkondensatoren zugehörig sind, um korrelierte Daten zu erhalten;

Mittel zum Bestimmen, basierend zumindest auf den korrelierten Daten, ob Regen auf einer äußeren Oberfläche des Fensters vorhanden ist; und

wobei dieses Korrelieren autokorrelieren und/oder kreuzkorrelieren ist.

8. Der Regensensor nach Anspruch 1, wobei sowohl der erste als auch der zweite Detektorkondensator (C1, C2) erste und zweite voneinander beabstandete Elektroden (7, 8) umfasst, die im Wesentlichen koplanar zueinander sind.

9. Der Regensensor nach Anspruch 1, wobei der Schreibpuls einem Gate eines ersten Transistors (Q1) zugeführt wird, das elektrisch mit dem ersten Detektorkondensator (C1) verbunden ist, und der Löschpuls wird an entsprechenden Gates von zweiten und dritten Transistoren (Q2, Q3) angewandt, die elektrisch mit dem ersten Detektorkondensator verbunden sind bzw. dem nachahmenden Kondensator ($C_{INT}$).

10. Ein Verfahren zum Detektieren von Regen auf einer Oberfläche eines Fensters (1; 10), welches Verfahren die folgenden Schritte umfasst:

Bereitstellen von ersten und zweiten voneinander getrennten Schreibpulsen, die jeweils erste und zweite Detektorkondensatoren (C1, C2) einer Detektorschaltung dazu veranlassen aufzuladen, wobei der erste Detektorkondensator auflädt, wenn der zweite Detektorkondensator im Wesentlichen entladen ist, und der zweite Detektorkondensator auflädt, wenn der erste Detektorkondensator im Wesentlichen entladen ist, so dass die ersten und zweiten Detektorkondensatoren zu unterschiedlichen Zeiten geladen werden;

wobei sowohl der erste als auch der zweite Detektorkondensator auf Feuchtigkeit auf der Oberfläche des Fensters reagieren kann;

Bereitstellen eines ersten Löschpulses, zwischen den Zeiten der ersten und zweiten Schreibpulse, wobei der erste Löschpuls den ersten Detektorkondensator dazu veranlasst, sich im Wesentlichen zu entladen, und Bereitstellen eines zweiten Löschpulses nach dem zweiten Schreibpuls, wobei der zweite Löschpuls den zweiten Detektorkondensator dazu veranlasst, sich im Wesentlichen zu entladen;

wobei eine Größe einer Ausgabe der Detektorschaltung durch die Anwesenheit von Regen auf der Oberfläche des Fensters beeinflusst wird;

Umwandeln eines analogen Ausgangssignals der Detektorschaltung in ein digitales Signal und, basierend auf dem digitalen Signal, Bestimmen ob Regen auf der Oberfläche des Fensters anwesend ist;

wobei die Detektorschaltung weiter zumindest einen nachahmenden Kondensator ($C_{INT}$) umfasst, der ein Laden und Entladen von zumindest einem von dem ersten und zweiten Detektorkondensator nachahmt, und wobei die Anwesenheit von Regen auf der Oberfläche des Fensters in einem Detektorfeld des ersten Detektorkondensators eine Spannung an einer Ausgangselektrode des nachahmenden Kondensators dazu veranlasst zu schwanken, in einer Weise die proportional zu einer Schwankung der Spannung einer Ausgangselektrode des ersten Detektorkondensators ist, selbst wenn der Regen nicht in einem Feld des nachahmenden Kondensators vorhanden ist; und

Detektieren von Regen basierend auf einem Ausgangssignal von der Ausgangselektrode des nachahmenden Kondensators.

**11.** Das Verfahren nach Anspruch 10, wobei jeder der ersten und zweiten Detektorkondensatoren erste und zweite voneinander beabstandete Elektroden (7, 8) umfasst, die im Wesentlichen koplanar miteinander sind und die von einem Fenster getragen sind.

**12.** Das Verfahren nach Anspruch 10, wobei die Schreibpulse einem Gate eines ersten Transistors (Q1) zugeführt werden, das elektrisch mit zumindest einem der Detektorkondensatoren (C1, C2, C3, C4) verbunden ist, und wobei die Löschpulse an entsprechende Gates von zweiten und dritten Transistoren (Q2, Q3) angewandt werden.

**13.** Das Verfahren nach Anspruch 10, weiter umfassend:

Korrelieren von Daten des digitalen Signals, um korrelierte Daten zu erhalten;

Bestimmen, basierend zumindest auf den korrelierten Daten, ob Regen auf der Oberfläche des Fensters anwesend ist; und

wobei dieses Korrelieren autokorrelieren und/oder kreuzkorrelieren ist.

**Revendications**

**1.** Un détecteur de pluie comprenant :

un circuit détecteur comprenant au moins un premier et un second condensateur de détection (C1, C2) qui sont sensibles à l'humidité sur une surface externe d'une vitre (1; 10) ; **caractérisé en ce que** le circuit de détection comprend en outre au moins un condensateur de réplication ($C_{int}$) qui réplique la charge et la décharge d'au moins le premier condensateur de détection ;

dans lequel une impulsion d'écriture provoque la charge de chacun d'entre le premier condensateur de détection (C1) et le condensateur de réplication ($C_{int}$), et une impulsion d'effacement provoque la décharge substantielle de chacun d'entre le premier condensateur de détection (C1) et le condensateur de réplication ($C_{int}$) ;

dans lequel la présence de pluie sur la surface externe de la vitre dans un champ de détection du premier condensateur de détection (C1) provoque la fluctuation d'une tension sur une électrode de sortie du condensateur de réplication ($C_{int}$) d'une manière proportionnelle à la fluctuation de la tension sur une électrode de sortie du premier condensateur de détection (C1), quand bien même la pluie ne serait pas présente dans un champ du condensateur de réplication ; et

dans lequel la pluie est détectée en fonction d'un signal de sortie provenant de l'électrode de sortie du condensateur de réplication, le signal de sortie étant lu au moins entre une fin de l'impulsion d'écriture et un début de l'impulsion d'effacement.

**2.** Le détecteur de pluie de la revendication 1, dans lequel le signal de sortie de l'électrode de sortie du condensateur de réplication ($C_{int}$) est converti d'analogique en numérique, et est ensuite soumis à un traitement pour déterminer si de la pluie est présente ou non sur la surface extérieure de la vitre, et dans lequel ledit traitement comprend de préférence une autocorrélation et/ou une intercorrélation.

**3.** Le détecteur de pluie de la revendication 1, dans lequel le circuit de détection comprend un réseau de condensateurs de détection (C1, C2, $C_3$, $C_4$) et dans lequel le condensateur de réplication ($C_{int}$) réplique chacun des condensateurs de détection du réseau qui sont séquentiellement chargés et déchargés.

**4.** Le détecteur de pluie de la revendication 1, dans lequel les électrodes des premier et second condensateurs de détection (C1, C2) sont flottantes, de sorte que les condensateurs de détection soient électriquement isolés de la masse.

**5.** Le détecteur de pluie de la revendication 1, dans lequel les premier et second condensateurs de détection (C1, C2) présentent une géométrie fractale.

**6.** Le détecteur de pluie de la revendication 1, dans lequel le condensateur de réplication ($C_{int}$) est physiquement séparé des condensateurs de détection (C1, C2), et dans lequel l'impulsion d'écriture provoque la charge du premier condensateur de détection (C1), mais pas du second condensateur de détection (C2), et provoque également la charge du condensateur de réplication ($C_{int}$).

**7.** Le détecteur de pluie de la revendication 1, comprenant en outre :

des moyens pour corréler des données en provenance du condensateur de réplication ($C_{int}$) qui sont en relation avec au moins l'un des condensateurs de détection pour obtenir des données corrélées ;
des moyens pour déterminer, sur la base au moins des données corrélées, si de la pluie est présente ou non sur une surface extérieure de la vitre ; et
dans lequel ladite corrélation est une autocorrélation et/ou une intercorrélation.

**8.** Le détecteur de pluie de la revendication 1, dans lequel chacun d'entre les premier et second condensateurs de détection (C1, C2) comprend une première et une seconde électrode (7, 8) espacées l'une de l'autre qui sont substantiellement coplanaires l'une avec l'autre.

**9.** Le détecteur de pluie de la revendication 1, dans lequel l'impulsion d'écriture est appliquée à une grille d'un premier transistor (Q1) qui est électriquement relié au premier condensateur de détection (C1), et l'impulsion d'effacement est appliquée à des grilles respectives de second et troisième transistors (Q2, Q3) qui sont électriquement reliés au premier condensateur de détection et au condensateur de réplication ($C_{int}$) respectivement.

**10.** Un procédé de détection de pluie sur une surface d'une vitre (1; 10), le procédé comprenant :

la délivrance d'une première et d'une seconde impulsions d'écriture espacées l'une de l'autre qui provoquent respectivement la charge d'un premier et d'un second condensateurs de détection (C1, C2) d'un circuit de détection, le premier condensateur de détection se chargeant lorsque le second condensateur de détection est substantiellement déchargé, et le second condensateur de détection se chargeant lorsque le premier condensateur de détection est substantiellement déchargé, de sorte que les premier et seconds condensateurs de détection soient chargés à des moments différents ;
chacun des premier et second condensateurs de détection étant sensible à de l'humidité sur la surface de la vitre ;
la délivrance d'une première impulsion d'effacement, entre les instants des première et seconde impulsions d'écriture, la première impulsion d'effacement provoquant la décharge substantielle du premier condensateur de détection, et la délivrance d'une seconde impulsion d'effacement après la seconde impulsion d'écriture de sorte que la seconde impulsion d'effacement provoque la décharge substantielle du second condensateur de détection,
dans lequel une grandeur d'une sortie du circuit de détection est affectée par la présence de pluie sur la surface de la vitre ;
la conversion d'un signal de sortie analogique du circuit de détection en un signal numérique et, sur la base du signal numérique, la détermination du point de savoir si de la pluie est présente ou non sur la surface de la vitre ;
dans lequel le circuit de détection comprend en outre au moins un condensateur de réplication ($C_{int}$) qui réplique la charge et la décharge d'au moins l'un des premier et second condensateurs de détection, et la présence de pluie sur la surface de la fenêtre dans un champ de détection du premier condensateur de détection provoque la fluctuation d'une tension sur une électrode de sortie du condensateur de réplication d'une manière proportionnelle à la fluctuation de tension sur une électrode de sortie du premier condensateur de détection, quand bien même la pluie ne serait pas présente dans un champ du condensateur de réplication ; et

la détection de pluie sur la base d'un signal de sortie en provenance de l'électrode de sortie du condensateur de réplication.

11. Le procédé de la revendication 10, dans lequel chacun d'entre les premier et second condensateurs de détection comprend une première et une seconde électrode espacées l'une de l'autre (7, 8) qui sont substantiellement coplanaires l'une avec l'autre et qui sont supportées par la vitre.

12. Le procédé de la revendication 10, dans lequel les impulsions d'écriture sont délivrées à une grille d'un premier transistor (Q1) qui est électriquement relié à au moins l'un des condensateurs de détection (C1, C2, $C_3$, $C_4$) et les impulsions d'effacement sont appliquées à des grilles respectives de second et troisième transistors ($Q_2$, $Q_3$).

13. Le procédé de la revendication 10, comprenant en outre :

la corrélation de données du signal numérique pour obtenir des données corrélées ;
la détermination, sur la base au moins des données corrélées, du point de savoir si de la pluie est présente sur la surface de la vitre ; et
dans lequel ladite corrélation est une autocorrélation et/ou une intercorrélation.

Fig. 1A

**Fig. 1B**

**Fig. 1C**

**Fig. 1D**

**Fig. 1E**

EP 1 971 509 B1

**Fig. 1F**

Fig. 2A

Silver Frit Width = 1 mm
24

Each Capacitor C1- C4
Length = 50mm

Contact Pad
28

Gap = 0.6 mm
22

Black Frit
9

C1

C2

C4

C3

EP 1 971 509 B1

Outer line width = 2mm
Inner line width = 1mm
Air gap = 0.6mm

All units are in mm

Inner circle diameter = 6mm
Outer circle diameter = 13mm
Distance between contact pads = 1mm

Fig. 2B

Fig. 3

$$Vout \approx k. \frac{W_1 L_2}{W_2 L_1} \left( \frac{Cs}{Cint} \right) \left( V_{cc} - |V_T| \right)$$

Fig. 4

$$Vout \approx k.\frac{W_6 L_5}{L_6 W_5}\left(\frac{C_s}{C_{int}}\right)\left(Vcc - |V_t|\right)e^{\frac{t}{R_{on}C_{int}}}$$

*Fig. 5*

Fig. 6

*Fig. 7*

Start/Initialization
-Clear Buffer
-Sigma Delta Modulation — S800

Read multiple channels inputs C1,C2,...Ck — S802

Park Wipers & Stop — S808

**Autocorrelator Engine**
(to identify rain from other disturbances)
*3 conditions*

A. Rxx has no negative values
B. The gradient is greater than 1
C. The shape of Rxx curve is different from database data (normalized non-disturbed autocorrelation) — S804

Are all conditions met? — S806
No / Yes

Wiper @ Lowest Speed — S810

**Cross-Correlator Engine** (to detect rain levels)
Compare the two sides of the cross-correlation curve
Determine the symmetry level: L — S812

Is L < t_min? — S814
Yes → Lowest Speed Speed #1 — S816
No

Is t_min < L < t? — S818
Yes → Speed #2 — S820
No

Is L > t_max? — S822
Yes → Highest Speed Speed #N — S824

*Fig. 8*

Fig. 9

*Fig. 10*

Fig. 11A

Fig. 11B

Fig. 11C

Fig. 11D

|    | C1 | C2 | C3 | C4 |
|----|----|----|----|----|
| C1 | H  | L  | H  | H  |
| C2 | L  | H  | H  | H  |
| C3 | H  | H  | H  | L  |
| C4 | H  | H  | L  | H  |

*Fig. 12A*

|    | C1 | C2 | C3 | C4 |
|----|----|----|----|----|
| C1 | H  | L  | H  | H  |
| C2 | L  | H  | H  | H  |
| C3 | H  | H  | H  | L  |
| C4 | H  | H  | L  | H  |

*Fig. 12B*

EP 1 971 509 B1

## Autocorrelation Example

| | $-t_2$ | $-t_1$ | $t=0$ | $t_1$ | $t_2$ | $t_3$ |
|---|---|---|---|---|---|---|
| C1 | 0 | 0 | 1 | 1 | 0 | 0 |
| × C1 | 0 | 0 | 1 | 1 | 0 | 0 |

$ac_0 = 0 + 0 + 1 + 1 + 0 + 0 = 2$ [Sum]

| | $-t_2$ | $-t_1$ | $t=0$ | $t_1$ | $t_2$ | $t_3$ | |
|---|---|---|---|---|---|---|---|
| | 0 | 0 | 1 | 1 | 0 | 0 | |
| × | | 0 | 0 | 1 | 1 | 0 | 0 |

$ac_1 = 0 \quad 0 \quad 0 \quad 1 \quad 0 \quad 0 \quad 0 = 1$ [Sum]

*Fig. 13*

| | Signal | Delta |
|---|---|---|
| No-Disturbance @ 65 F | N1 | 0 |
| | N2 | 0.8 |
| | N3 | 0.3 |
| | N4 | 0.7 |
| | N5 | 0.3 |
| | | |
| | | |
| on target water @ 65 F | S1 | 6 |
| | S2 | 55 |
| | S3 | 52 |
| | S4 | 63 |
| | S5 | 60 |
| | | |
| | | |
| off target water @ 65 F | F1 | 1 |
| | F2 | 0.3 |
| | F3 | 5 |
| | F4 | 3 |
| | F5 | 0.6 |
| | | |
| | | |
| no-disturbance @ 130 F | H1 | 0.3 |
| | H2 | 0.5 |
| | H3 | 0.4 |
| | H4 | 0.7 |
| | | |
| | | |
| on target water @ 130 F | W1 | 61 |
| | W2 | 49 |
| | W3 | 66 |
| | W4 | 19 |
| | W5 | 64 |
| | | |
| | | |
| off target water @ 130 F | K1 | 6 |
| | K2 | 24 |
| | K3 | 4.8 |
| | K4 | 4 |
| | K5 | 2 |

*Fig. 14*

Note: Delta = difference computed between each signal's normalized autocorrelation datapoint and the normalized autocorrelation of a reference (no-disturbance)

38

1. (S1 & S3)

Fig. 15

2. (S2 & S4)

Fig. 16

3. (S3 & S2)

Fig. 17

4. (S1, S5)

Fig. 18

5. (S4 & S1)

Fig. 19

1. (W1 & W2)

Fig. 20

4. (W4 & W1)

Fig. 21

5. (W4 & W5)

Fig. 22

2. (W3 & W4)

On target water present on both C1 and C2

*Fig. 23*

3. (W2, W5)

On target water present on both C1 and C2

*Fig. 24*

*Fig. 25*

EP 1 971 509 B1

*Fig. 26*

EP 1 971 509 B1

Fig. 27

Fig. 28A

Fig. 28B

EP 1 971 509 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3736049
- US 6373263 B
- US 6686050 B
- US 6723211 B
- US 6782718 B
- US 6749941 B
- US 6730352 B
- US 6802943 B
- US 4782216 A
- US 3682528 A
- US 6936347 B

- US 6552690 B
- US 6104349 A
- US 6140975 A
- US 6127977 A
- US 6084285 A
- US 6975277 B
- US 6975257 B
- US 6972704 B
- US 6967608 B
- US 6980144 B